Europäisches Patentamt

European Patent Office

Office européen des brevets

(19)

(11) Veröffentlichungsnummer: **0 276 795**
**A2**

(12) **EUROPÄISCHE PATENTANMELDUNG**

(21) Anmeldenummer: 88101026.8

(22) Anmeldetag: 25.01.88

(51) Int. Cl.⁴: **B01D 29/18**

(30) Priorität: 26.01.87 DE 3702156
28.01.87 DE 3702489
04.06.87 DE 3718660
27.07.87 DE 3724805
08.10.87 DE 3733971

(43) Veröffentlichungstag der Anmeldung:
**03.08.88 Patentblatt 88/31**

(84) Benannte Vertragsstaaten:
**ES GR**

(71) Anmelder: **Couwenbergs, Paul**
**Scheibenbergstrasse 17**
**D-7500 Karlsruhe 21(DE)**

(72) Erfinder: **Sander, Renald**
**Fahrstrasse 8**
**D-7530 Pforzheim 8(DE)**
Erfinder: **Otto, Werner**
**Waldspitze 23**
**D-8503 Altdorf(DE)**
Erfinder: **Couwenbergs, Paul**
**Scheibenbergstrasse 17**
**D-7500 Karlsruhe 21(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**D-5620 Velbert 11 Langenberg(DE)**

(54) **Filtergerät zum Filtern von verunreinigten Flüssigkeiten.**

(57) Zum Filtern von verunreinigten Flüssigkeiten wie Motorenöl oder Speiseöl ist eine Filterpatrone (62) mit zwei gleichachsigen Filterelementen (12, 14) vorgesehen. Die Filterelemente (12, 14) bestehen aus einer Rolle aus einem kunststoffhaltigen, doppellagigen Papier mit einer Wabenstruktur. Zwischen den Filterelementen (12, 14) ist ein Zwischenraum (32) gebildet, der durch eine Hülse (10) nach außen abgeschlossen ist. Die Filterpatrone (62) sitzt in einem Gehäuse (64). Der Zwischenraum (32) ist mit einem Flüssigkeitsvorlauf verbunden. Die Flüssigkeit wird, wie durch die Pfeile dargestellt, axial durch die Filterelemente (12, 14) gedrückt und tritt an den Stirnflächen (56, 58) aus. Auf diese Weise sammelt sich in dem Gehäuse (64) nur gefilterte Flüssigkeit. Außerdem ist das Gehäuse (64) drucklos.

Fig. 3

## Filtergrät zum Filtern von verunreinigten Flüssigkeiten

### Technisches Gebiet

Die Erfindung betrifft ein Verfahren und ein Filtergerät zum Filtern verunreinigter Flüssigkeiten.

Die zu filternden Flüssigkeiten können dabei Motorenöle sein, die von Kohle, Abrieb, Wasser und dgl. befreit werden sollen. Bei einer laufenden Filterung des Motorenöls während des Betriebes des Motors bleibt das Motorenöl klar und voll funktionsfähig. Es wird dadurch nicht nur die Notwendigkeit eines Ölwechsels und der Beseitigung des Altöls vermieden, sondern auch die Funktion und Lebensdauer des Motors verbessert. Eine andere Anwendung eines Filtergerätes ist die Filterung von Speiseölen in Friteusen o. dgl. Ein Filtergerät, welches das Speiseöl während des Betriebes der Friteuse laufend filtert, eliminiert krebserregende Verbrennungsprodukte, unerwünschte Geruchs-und Geschmacksstoffe sowie Wasser.

### Zugrunde liegender Stand der Technik

Durch die US-A-3 308 956 und die GB-B-2 094 652 sind Ölfilter mit einem einzigen, ringförmigen Filterelement bekannt, das in axialer Richtung von dem zu reinigenden Öl durchflossen wird. Die dort beschriebenen Ölfilter sind geeignet für die Nebenstromfilterung von umlaufendem Motorenöl bei Verbrennungskraftmaschinen.

Die Filterelemente sind bekanntermaßen paarweise in Filterpatronen angeordnet. Zwei Filterelemente der beschriebenen Art sitzen in einer zylindrischen Hülse. Zwischen den einander zugewandten Stirnflächen der beiden Filterelemente oder Rollen ist ein Zwischenraum gebildet. Das wird durch Einlegen von Sieben zwischen die Filterelemente erreicht. Der Zwischenraum ist nach außen hin durch die Hülse abgeschlossen. Nach innen hin ist er durch den Spalt zwischen den Stirnflächen der beiden Kerne hindurch offen. Die Filterpatrone sitzt in einem Gehäuse, wobei zwischen der Filterpatrone und dem Gehäuse ein Mantelraum gebildet ist. Dieser Mantelraum steht mit einem Flüssigkeitsvorlauf in Verbindung. Die Innenräume der Kerne sind gegen den Mantelraum abgedichtet und mit einem Flüssigkeitsrücklauf verbunden.

Bei dieser bekannten Anordnung ist der Mantelraum mit ungereinigter Flüssigkeit gefüllt. Es setzen sich dadurch Verunreinigungen an der Innenwandung des Gehäuses ab. Diese abgesetzten Verunreinigungen bleiben auch nach einem Wechsel der Filterpatrone bestehen.

Nachteilig ist weiterhin, daß das gesamte Innere des Gehäuses unter dem Vorlaufdruck der Flüssigkeit steht. Da dieser Vorlaufdruck die ggfs. recht viskose Flüssigkeit (Öl) durch die Filterelemente drücken muß, kann dieser Vorlaufdruck recht erheblich sein. Das Gehäuse muß daher sehr stabil und sehr dicht sein, um diesen Vorlaufdruck aufzunehmen. Bei geringen Vorlaufdrücken fließen jeweils nur geringe Mengen der Flüssigkeit durch das Filtergerät.

Es ist bekannt, eine Mehrzahl solcher Filterpatronen gleichachsig zueinander in einem langgestreckten Gehäuse anzuordnen und strömungsmäßig parallel zu schalten. Damit kann der erforderliche Vorlaufdruck weiter vermindert werden.

Es ist weiterhin bekannt, solche Filtergeräte außer dem Filtern von Motorölen auch zum Filtern anderer Flüssigkeiten wie Speiseöl, Hydrauliköl, Flüssigkeiten bei der chemischen Reinigung, Altöl, Wasser, Benzin oder Dieseltreibstoff zu verwenden.

Es sind für solche Filter ringförmige Filterelemente bekannt, die jeweils aus einer Rolle aus einem bandförmigen, saugfähigen Material gebildet sind, die auf einen hohlen Kern aufgewickelt sind. Das bandförmige, saugfähige Material kann aus einem Wasser aufsaugenden, Partikel zurückhaltenden Spezialpapier bestehen, das für Öl durchlässig ist. Nachteilhaft ist dabei, daß solche Filter relativ häufig ausgetauscht werden müssen, weil sie nur begrenzte Wassermengen aufnehmen können und sich durch die filtrierten Partikel relativ leicht zusetzen.

Für Putztücher oder Einwegartikel wie Kittel, Bettwäsche und dergleichen, besonders im medizinischen Bereich, ist ein Spezialpapier mit einem Flächengewicht von 85 bis 90 g/m² bekannt, das zu 94 Gew.-% aus Cellulose und 6 Gew.-% aus einem indifferenten Kunststoff besteht (Hiloft 3051, Wypall, Itex Software; Scott paper, Scott Plaza, Philadelphia, USA).

Nach Verbrauch einer Filterpatrone kann die Filterpatrone herausgenommen und durch eine andere ersetzt werden.

Bei bekannten Druckumlaufsystemen, bei denen eine Flüssigkeit zum Beispiel zu Kühl- oder Schmierzwecken aus einem Vorratsbehälter umgepumpt wird, ist in vielen Fällen ein Hauptstromfilter in eine Druckleitung eines Hauptstromkreises und ein Nebenstromfilter in eine Druckleitung eines Nebenstromkreises eingebaut, um die umlaufende Flüssigkeit von Schwebeteilchen zu reinigen.

Dabei bildet das Hauptstromfilter ein Grobfilter mit relativ großer Porenweite für relativ grobe Schwebeteilchen und das Nebenstromfilter ein Feinstfilter mit relativ kleiner Porenweite für relativ feine Schwebeteilchen. Ein Beispiel für ein solches Druckumlaufsystem stellt die Druckumlaufschmierung für Verbrennungsmotoren dar, bei der ein Haupt-und ein Nebenstromfilter jeweils in von der Ölpumpe ausgehende Druckleitungen eingebaut sind und ausgangsseitig über den Motorblock mit der Ölwanne in Verbindung stehen.

In den bekannten Druckumlaufsystemen sind getrennte Haupt-und Nebenstromfilter vorgesehen, was den Aufbau des Druckumlaufsystems kompliziert macht und durch den Nebenstromkreis in unerwünschter Weise zusätzlichen Raum beansprucht.

Offenbarung der Erfindung

Der Erfindung liegt die Aufgabe zugrunde, ein Verfahren und ein Filtergerät der eingangs genannten Art zu schaffen, die auch bei langen Betriebszeiten insbesondere beim Filtrieren zweiphasiger Flüssigkeiten wie wasserhaltiger Öle hohe Filtrierleistungen erbringen.

Hinsichtlich des erfindungsgemäßen Filtergerätes besteht eine spezielle Aufgabe darin, die Verschmutzung eines eine Filterpatrone enthaltenden Gehäuses durch die verunreinigten Flüssigkeiten zu vermeiden.

Bei einem solchen Filtergerät nach der Erfindung soll auch eine Druckbelastung eines die Filterpatrone enthaltenden Gehäuses vermieden werden.

Eine weitere spezielle Aufgabe besteht darin, bei einem Filtergerät der eingangs genannten Art den Filterwechsel zu vereinfachen und zu erleichtern, insbesondere, das Filtergerät als "Wegwerfteil" auszubilden, so daß nicht zum Filterwechsel eine verschmutzte Filterpatrone aus einem Gehäuse herausgezogen zu werden braucht und sich auch das Problem der Schmutzablagerung in dem Gehäuse nicht stellt.

Schließlich besteht weiterhin eine spezielle Aufgabe darin, ein Filtergerät der eingangs genannten Art zu schaffen, das ein integriertes Haupt-und Nebenstromfilter enthält.

Erfindungsgemäß wird die allgemeine Aufgabe hinsichtlich des erfindungsgemäßen Verfahrens dadurch gelöst, daß die Flüssigkeit durch mindestens ein Filterelement aus Papier mit einem Flächengewicht im Bereich von 75 bis 100 $g/m^2$ geleitet wird, das 85 bis 98 Gew.-% Cellulose and 15 bis 2 Gew.-% eines indifferenten Kunststoffes, bezogen auf das Gesamttrockengewicht = 100, und das aus mindestens zwei durch eine Wabenstruktur zusammengehaltenen Schichten besteht.

Hinsichtlich des erfindungsgemäßen Filtergerätes wird die allgemeine Aufgabe dadurch gelöst, daß mindestens ein Filterelement aus Papier mit einem Flächengewicht im Bereich von 75 bis 100 $g/m^2$ vorgesehen ist, das 85 bis 98 Gew.-% Cellulose und 15 bis 2 Gew.-% eines indifferenten Kunststoffes, bezogen auf das Gesamttrockengewicht = 100, enthält und aus mindestens zwei durch eine Wabenstruktur zusammengehaltenen Schichten besteht.

Es wurde überraschenderweise gefunden, daß Filterelemente aus solchem Papier hervorragend zur Filtration von wässrigen und nichtwässrigen Flüssigkeiten, insbesondere von Öl wie Schmieröl oder Hydrauliköl in Ölfilteranlagen geeignet sind. Unter Verwendung solcher Papiere hergestellte Filter oder Filterpatronen haben nicht nur eine hohe Filtrationswirkung, sondern besitzen den Vorteil, daß sie in gleicher Weise für wässrige wie für nichtwässrige Flüssigkeiten geeignet sind und sich nicht leicht durch suspendierte Feststoffe zusetzen, woraus lange Nutzungsdauern und hohe Standzeiten resultieren.

Als besonders vorteilhaft hat sich die Verwendung dieses Papiers zum Filtrieren von Schmieröl in der Druckumlaufschmierung von Verbrennungsmotoren erwiesen, da sowohl Wasser als auch Rußteilchen außerordentlich wirksam aus dem umlaufenden Schmieröl entfernt werden, und zwar bei Standzeiten oder Nutzungsdauern, wie sie üblicherweise für die Ölfilter verlangt werden, die in die Druckumlaufschmierung von Verbrennungsmotoren eingebaut werden.

Vorteilhafte Ausgestaltungen des erfindungsgemäßen Filtergerätes, die jeweils für die Lösung der speziellen Aufgaben geeignet sind, werden in den Unteransprüchen gekennzeichnet.

Kurze Beschreibung der Zeichnungen

Einige Ausführungsbeispiele der Erfindung sind nachstehend unter Bezugnahme auf die zugehörigen Zeichnungen näher erläutert:

Fig. 1 zeigt eine Ausführung einer einzelnen Filterpatrone.

Fig. 2 zeigt ein Sieb, wie es zur Bildung des Zwischenraumes zwischen den Filterelementen bei der Filterpatrone benutzt wird.

Fig. 3 zeigt ein Filtergerät mit einer einzelnen Filterpatrone, das beispielsweise als Vollstromölfilter für Motorenöl an einen Motorblock einer Verbrennungskraftmaschine ansetzbar ist.

Fig. 4 eine andere Ausführungsform eines Filtergerätes mit einer einzelnen Filterpatrone.

Fig. 5 zeigt die Filterpatrone in einem Schnitt längs der Linie V-V von Fig. 4.

Fig. 6 zeigt eine Abwandlung der Anordnung von Fig. 4.

Fig. 7 zeigt ein Filtergerät mit einer Mehrzahl von gleichachsig angeordneten, strömungsmäßig parallelgeschalteten Filterpatronen in einem langgestreckten Gehäuse.

Fig. 8 zeigt ein Filtergerät mit einer einzelnen Filterpatrone ohne Gehäuse.

Fig. 9 zeigt eine weitere Ausführung eines Filtergerätes.

Fig. 10 zeigt im Schnitt eine erste Ausführungsform eines als Wegwerfteil konstruierten Filtergerätes.

Fig. 11 ist eine perspektivische Darstellung einer leicht lösbaren Halterung des Filtergerätes zum Beispiel im Motorraum eines Kraftfahrzeugs.

Fig. 12 zeigt im Schnitt eine zweite Ausführungsform eines als Wegwerfteil konstruierten Filtergerätes.

Fig. 13 zeigt einen Längsschnitt durch ein erstes Ausführungsbeispiel eines Filtergerätes mit einem kombinierten Haupt-und Nebenstromfilter.

Fig. 14 zeigt einen Längsschnitt durch ein zweites Ausführungsbeispiel eines Filtergerätes mit einem kombinierten Haupt-und Nebenstromfilter.

Fig. 15 zeigt einen Längsschnitt durch ein Ausführungsbeispiel eines Filtergerätes, bei welchem ein Vorfilter mit einem hochwirksamen Papierfilter kombinierbar ist, jedoch ohne eingesetztes Vorfilter.

Fig. 16 zeigt das Filtergerät von Fig.15 mit eingesetztem Vorfilter.

Fig. 17 zeigt einen Längsschnitt einer weiteren Ausführungsform eines Filtergeräts.

Bevorzugte Ausführungen der Erfindung

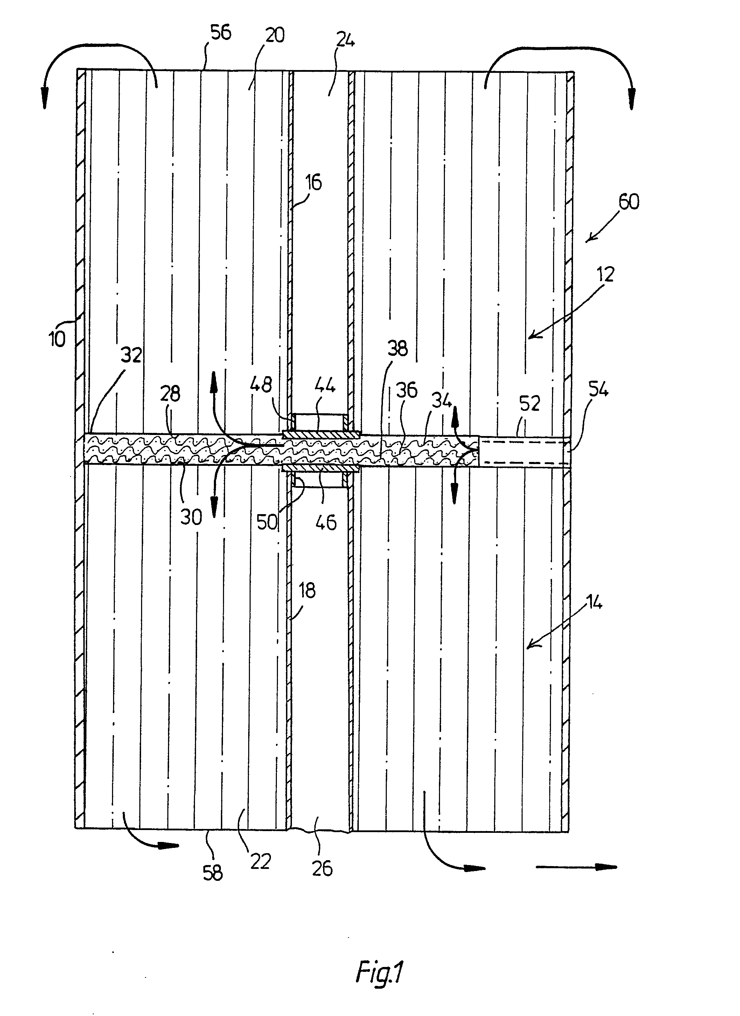

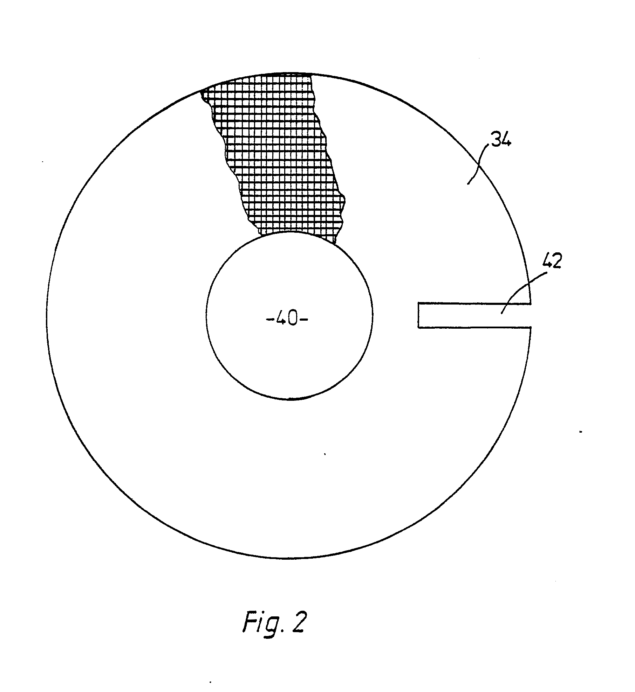

In Fig. 1 ist mit 10 eine zylindrische Hülse bezeichnet, die aus Pappe, Kunststoff oder Metall bestehen kann. In der Hülse 10 sitzen zwei Filterelemente 12 und 14. Jedes der Filterelemente 12 und 14 enthält einen rohrförmigen, hohlen Kern 16 bzw. 18, auf den eine Rolle 20 bzw. 22 aus bandförmigem, saugfähigen Material, nämlich einem speziellen Filterpapier aufgewickelt ist. Es entsteht so ein zylindrisch-ringförmiges Filterelement 12 oder 14 mit einem durchgehenden Innenraum 24 bzw. 26. Die Filterelemente 12 und 14 sitzen mit ihren Außenflächen und mit Vorspannung eng in der Hülse 10. Zwischen den einander zugekehrten, inneren Stirnflächen 28 und 30 der Filterelemente 12 bzw. 14 ist ein Zwischenraum 32 gebildet. Dieser Zwischenraum 32 wird dadurch erhalten und sichergestellt, daß zwischen die Filterelemente 12 und 14 drei Siebe 34, 36, 38 eingelegt sind. Ein solches Sieb 34 ist in Fig. 2 dargestellt. Das Sieb von Fig. 2 ist kreisrund und weist einen zentralen, kreisrunden Durchbruch 40 auf. Weiterhin ist an dem Umfang des Siebes 34 ein rechteckiger, im wesentlichen radialer Einschnitt 42 angebracht. Der Durchbruch 40 umgibt den Durchgang zwischen den inneren Enden der hohlen Kerne 16 und 18 mit den Innenräumen 24 bzw. 26. In die inneren Enden der hohlen Kerne 16 und 18 sind Verschlußkappen 44 bzw. 46 mit Kragen 48 bzw. 50 eingesteckt. Dadurch sind die Innenräume 24 und 26 der hohlen Kerne 16 bzw. 18 gegen den Zwischenraum 32 abgedichtet. In den Bereich des Ausschnitts 42 ragt bei der Ausführung nach Fig. 1 eine Gewindehülse 52, die um einen Durchbruch 54 herum an der Hülse 10 angebracht ist. In diese Gewindehülse 52 is ein (noch zu beschreibender) Anschlußnippel einschraubbar, der an einen (nicht dargestellten) Flüssigkeitsvorlauf angeschlossen ist. Eine zu filternde, verunreinigte Flüssigkeit wird daher, wie durch die Pfeile angedeutet, in den durch die Hülse 10 außen und durch die Kappen 44, 46 abgeschlossenen Zwischenraum 32 eingeleitet und dann in entgegengesetzen Richtungen axial durch die Rollen 20 und 22 der Filterelemente 12 und 14 hindurchgedrückt. Die gefilterte Flüssigkeit tritt an den einander abgewandten Stirnflächen 56 und 58 der Filterelemente 12 bzw. 14 aus. Diese Stirnflächen 56 und 58 bilden auch die Stirnflächen der ganzen Filterpatrone, die generell mit 60 bezeichnet ist.

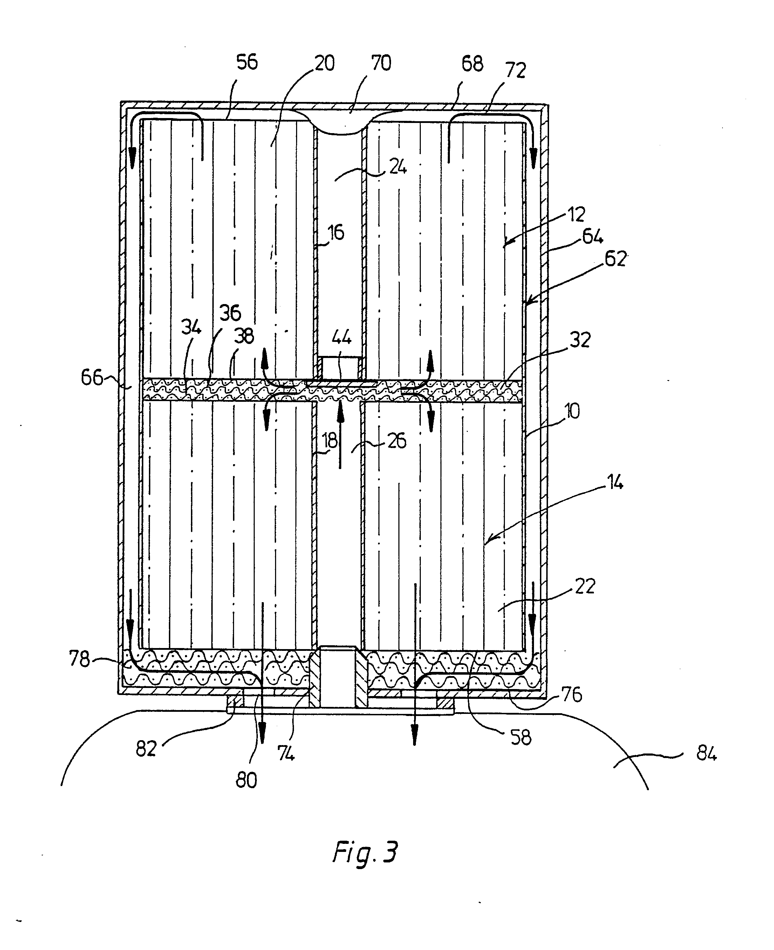

Fig. 3 zeigt ein Filtergerät mit einer Filterpatrone 62, die ähnlich aufgebaut ist wie die Filterpatrone 60 von Fig. 1. Entsprechende Teile sind in beiden Figuren mit den gleichen Bezugszeichen versehen.

Die Filterpatrone 62 enthält zwei Filterelemente 12 und 14, die in einer Hülse 10 gehaltert sind und einen Zwischenraum 32 bilden. Die Filterpatrone 62 sitzt in einem Gehäuse 64. Dieses Gehäuse 64 umgibt die Filterpatrone 62 mit Abstand, so daß zwischen Filterpatrone 62 und Gehäuse 64 ein Mantelraum 66 gebildet wird. In der in Fig. 3 oberen Stirnfläche 68 des Gehäuses 66 sitzt auf der Innenseite ein zentraler, kegelstumpfförmiger Stopfen 70. Auf diesem Stopfen 70 sitzt das obere Ende des hohlen Kerns 16 des Filterelements auf. Dadurch wird das Filterelement 12 im Abstand von der Stirnfläche 68 des Gehäuses 66 gehalten, so daß zwischen der Stirnfläche 56 der Filterpatrone 62 und der Stirnfläche 68 des Gehäuses 64 ein freier Raum 72 gebildet wird. Am unteren Ende ist der Innenraum 24 des Kernes 16 durch eine Kappe 44 abgeschlossen.

Das Gehäuse 64 weist einen Anschlußstutzen 74 auf, der zentral an der in Fig. 3 unteren Stirnfläche 76 angebracht ist und in das Innere des Gehäuses 64 ragt. Auf diesem Anschlußstutzen 74 sitzt das untere Ende des hohlen Kerns 18 des Filterelements 14. Dadurch wird die Filterpatrone 62 im Abstand von der Stirnfläche 76 des Gehäuses 64 gehalten. Zwischen der Stirnfläche 58 der Filterpatrone 62 und der Stirnfläche 76 des Gehäuses 64 ist somit ein freier Raum 78 gebildet. Um den Anschlußstutzen 74 herum ist in der Stirnfläche 76 des Gehäuses 64 eine Rücklauföffnung 80 zur Verbindung mit einem Flüssigkeitsrücklauf vorgesehen. Der Anschlußstutzen 74 kann in dieser Rücklauföffnung 80 mittels Stegen gehalten sein. Die Rücklauföffnung 80 kann aber auch von mehreren kleineren Durchbrüchen oder einem siebartigen Abschnitt der Stirnwand 76 gebildet werden. Die Rücklauföffnung 80 ist von einer Dichtung 82 umgeben.

Wie in Fig. 3 angedeutet ist, wird das Filtergerät auf einen Motorblock 84 aufgesetzt, wobei der Anschlußstutzen 74, wie gesagt, mit einem Flüssigkeitsvorlauf, d.h. hier Motorenölvorlauf, verbunden wird und die Rücklauföffnung 80 mit einem Flüssigkeitsrücklauf in Verbindung steht, der innerhalb der Dichtung 82 liegt.

Die zu filternde Flüssigkeit fließt dann, wie durch die Pfeile angedeutet ist, durch den Anschlußstutzen 74 und den Innenraum 26 des Kernes 18 in den Zwischenraum 32. Der Anschlußstutzen 74 und der Innenraum 26 bilden "Leitungsmittel". Aus dem Zwischenraum 32 wird die Flüssigkeit in axialer Richtung nach oben und unten durch die Rollen 20 bzw. 22 von Filterpapier in die freien Räume 72 bzw. 78 gedrückt. Aus dem Raum 72 fließt die gefilterte Flüssigkeit über den Mantelraum 66 ebenfalls in den Raum 78. Aus dem Raum 78 strömt diese Flüssigkeit über die Rücklauföffnung 80 zum Flüssigkeitsrücklauf ab.

Das Gehäuse 64 kommt dabei nur mit gefilterter Flüssigkeit in Berührung. Es kann daher nicht verschmutzen. Ablagerungen von der ungefilterten Flüssigkeit bleiben in der Filterpatrone 62 und werden bei deren Austausch mit dieser entfernt. Das Innere des Gehäuses 64 ist dabei drucklos.

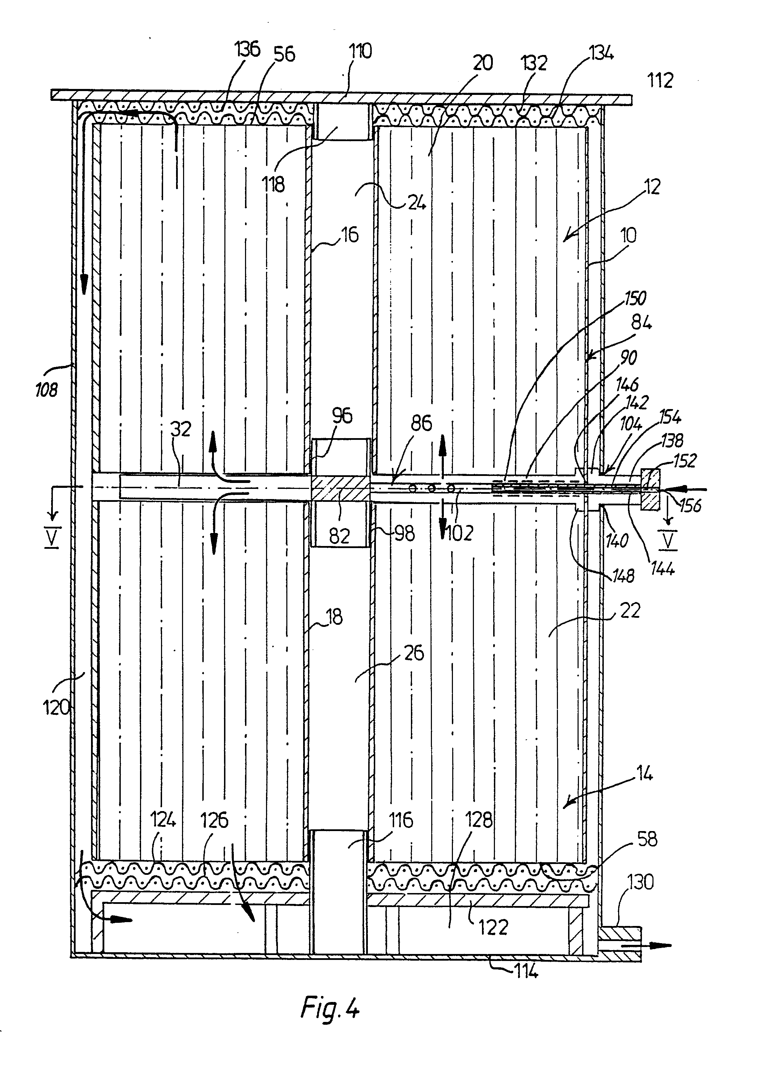

Fig. 4 zeigt eine weitere Ausführungsform eines Filtergerätes mit einer einzigen Filterpatrone 84. Auch hier sind entsprechende Teile mit den gleichen Bezugszeichen versehen wie in Fig. 1.

Die Filterpatrone 84 enthält zwei Filterelemente 12 und 14, die nach Art von Fig. 1 aufgebaut sind. Die Filterelemente 12 und 14 sitzen in einer Hülse 10. Zwischen den Filterelementen 12 und 14 ist ein Zwischenraum 32 gebildet.

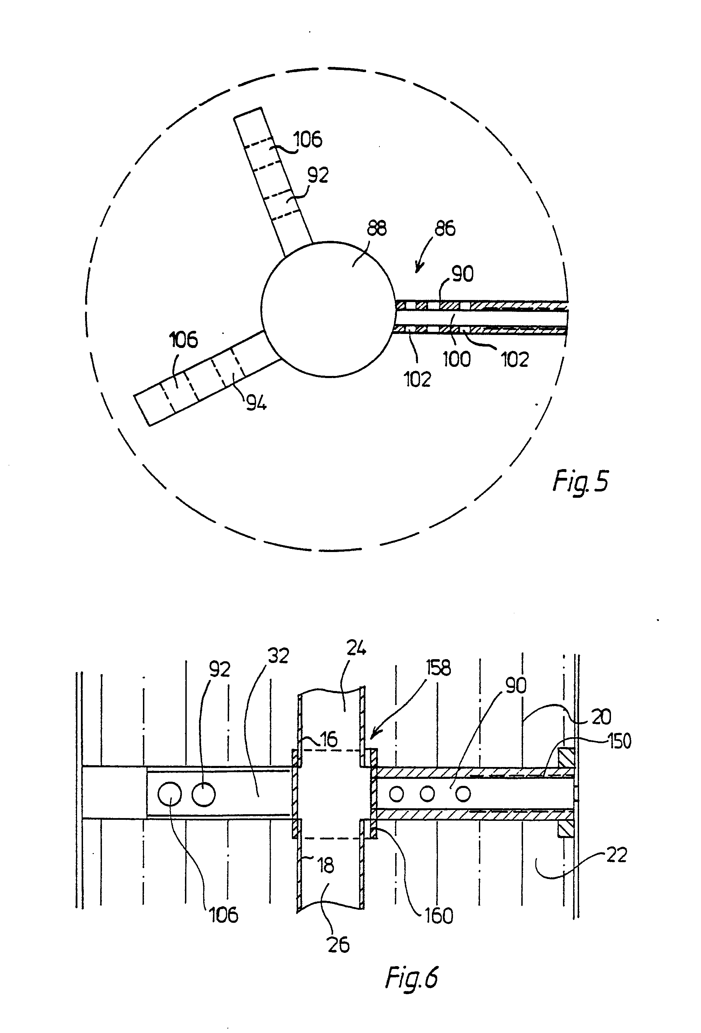

Bei der Ausführungsform nach Fig. 4 wird der Zwischenraum 32 durch ein Abstandsstück 86 bestimmt. Die Form des Abstandsstückes 86 ist am besten aus Fig. 4 und 5 ersichtlich. Das Abstandsstück 86 ist sternförmig ausgebildet. Das Abstandsstück 86 enthält einen kreisrunden Mittelteil 88 und radiale Leisten 90, 92 und 94 von rechteckigem Querschnitt. Der kreisrunde Mittelteil 88 dichtet die Innenräume 24 und 26 der hohlen Kerne 16 bzw. 18 gegen den Zwischenraum 32 ab. Zu diesem Zweck sind an dem Mittelteil 88 Rohrstutzen 96 und 98 angebracht, die sich in die Innenräume 24 bzw. 26 der hohlen Kerne 16 bzw. 18 erstrecken und abdichtend an deren Innenwandungen anliegen.

Wenigstens eine der Leisten, in dem Beispiel von Fig. 5 die Leiste 90, weist einen längsverlaufenden Flüssigkeitskanal 100 auf. Die Leiste 90 weist seitliche Öffnungen 102 auf, über welche der Flüssigkeitskanal 100 mit dem Zwischenraum 32 außerhalb des Abstandsstücks 86 in Verbindung steht. In den Flüssigkeitskanal 100 ragt ein mit einem Flüssigkeitsvorlauf verbundener radialer Anschlußnippel 104 hinein, wie noch beschrieben wird.

Wie aus Fig. 5 ersichtlich, sind die nicht mit dem Anschlußnippel 104 verbundenen Leisten 92 und 94 kürzer als die Radien der Filterelemente 12 und 14. Weiterhin weisen die den Flüssigkeitskanal 100 nicht enthaltenden Leisten 92 und 94 quer hindurchgehende Durchbrüche 106 auf. Dadurch ist eine Verteilung der über den Flüssigkeitskanal 100 und die Öffnungen 102 zufließenden Flüssigkeit über das gesamte Volumen des Zwischenraumes 32 gewährleistet.

Die Filterpatrone 84 sitzt in einem zylindrischen Gehäuse 108, das durch einen Deckel 110 abgeschlossen ist. Der Deckel 110 ist durch (nicht dargestellte) Flügelschrauben lösbar an dem Gehäuse 108 befestigt. An der in Fig. 4 unteren Stirnfläche 114 des Gehäuses 108 sitzt ein zentrales Zentrierrohr 116. Das Zentrierrohr 116 ragt in den Innenraum 26 des hohlen Kerns 18 des Filterelements 14 hinein. An dem Deckel 110 ist ein zentrales Zentrierrohr 118 angebracht. Dieses Zentrierrohr 118 ragt in den Innenraum 24 des hohlen Kerns 16 des Filterelements 12 hinein. Auf diese Weise ist die Filterpatrone 84 in radialer Richtung zentriert innerhalb des Gehäuses 108 gehalten. Zwischen der Filterpatrone 84 und dem Gehäuse 108 wird so ein Mantelraum 120 gebildet.

Am unteren Ende ist die Filterpatrone 84 auf einer Brücke 122 und mehreren Sieben 124, 126 abgestützt. Dadurch ist zwischen der Stirnfläche 58 der Filterpatrone 84 und der Stirnfläche 114 des Gehäuses 108 ein freier Raum 128 gebildet. Dieser freie Raum 128 ist über einen Anschluß 130 mit einer Flüssigkeitsrückführung verbunden.

Oberhalb der Filterpatrone 84 sind zwischen der oberen Stirnfläche 56 der Filterpatrone 84 und dem Deckel 110 des Gehäuses 108 ebenfalls Siebe 132, 134 angeordnet, die einen Raum 136 freihalten.

Im Bereich des Zwischenraumes 32 sitzt in der Wandung des Gehäuses 108 ein Führungsstück 138, das mit der Wandung bei 140 verschweißt ist. Das Führungsstück 138 weist einen Bund 142 auf, der sich durch den Mantelraum 120 erstreckt und an der Innenwand des Gehäuses 108 anliegt. Das Führungsstück 138 hat eine durchgehende Bohrung 144. Die Hülse 10 hat einen Durchbruch 146. Auf der Innenseite liegt an der Hülse 10 die Leiste 90 mit dem Flüssigkeitskanal 100 (Fig. 5) an. Die Leiste 90 weist einen Flansch 148 auf, der um den Durchbruch 146 herum an der Hülse 10 anliegt. Der Flüssigkeitskanal 100 ist an seinem offenen Ende mit einem Gewinde 150 versehen. Der Flüssigkeitskanal 100 fluchtet mit dem Durchbruch 146 und der Bohrung 144 des Führungsstücks 138. Der Anschlußnippel 104 weist einen Kopf 152 und einen mit Gewinde versehenen Schaft 154 auf. Mit dem Schaft 154 ist der Anschlußnippel in das Gewinde 150 des Flüssigkeitskanals 100 einschraubbar. Dabei legt sich der Kopf 152 an die Stirnfläche des Führungsstücks 138 abdichtend an und zieht die Leiste 90 mit dem Flansch 148 gegen die Hülse 10 und damit die Hülse 10 gegen den Bund 144. Der Anschlußnippel 104 hat einen durchgehenden Kanal 156, über welchen die Verbindung zwischen dem Flüssigkeitsvorlauf und dem Flüssigkeitskanal 100 hergestellt wird.

Bei dieser Anordnung wird die zu filternde Flüssigkeit radial durch die Wandung des Gehäuses 108, den Mantelraum 120 und die Hülse 10 hindurch über den Anschlußnippel 104 in den Zwischenraum 32 eingeleitet. Von dort ist die Strömung durch die Filterelemente 12 und 14 hindurch im wesentlichen die gleiche wie bei der Ausführung nach Fig. 3. Die gereinigte Flüssigkeit strömt über den Anschluß 130 zum Flüssigkeitsrücklauf.

Die Ausführungsform nach Fig. 6 ist ähnlich aufgebaut wie die Ausführung nach Fig. 5, und entsprechende Teile sind mit den gleichen Bezugszeichen versehen wie dort. Der Mittelteil 158, entsprechend dem Mittelteil 88 von Fig. 5, ist dort ein Rohrstück 160, dessen Durchmesser etwas größer ist als der Durchmesser der hohlen Kerne 16 und 18 der Filterelemente 12 bzw. 14. Dieses Rohrstück 160 drückt sich um die Kerne 16 und 18 herum in die Rollen 20 und 22 hinein. Dadurch wird der Zwischenraum gegen die beiden Innenräume 24 und 26 der Kerne 16 bzw. 18 abgedichtet.

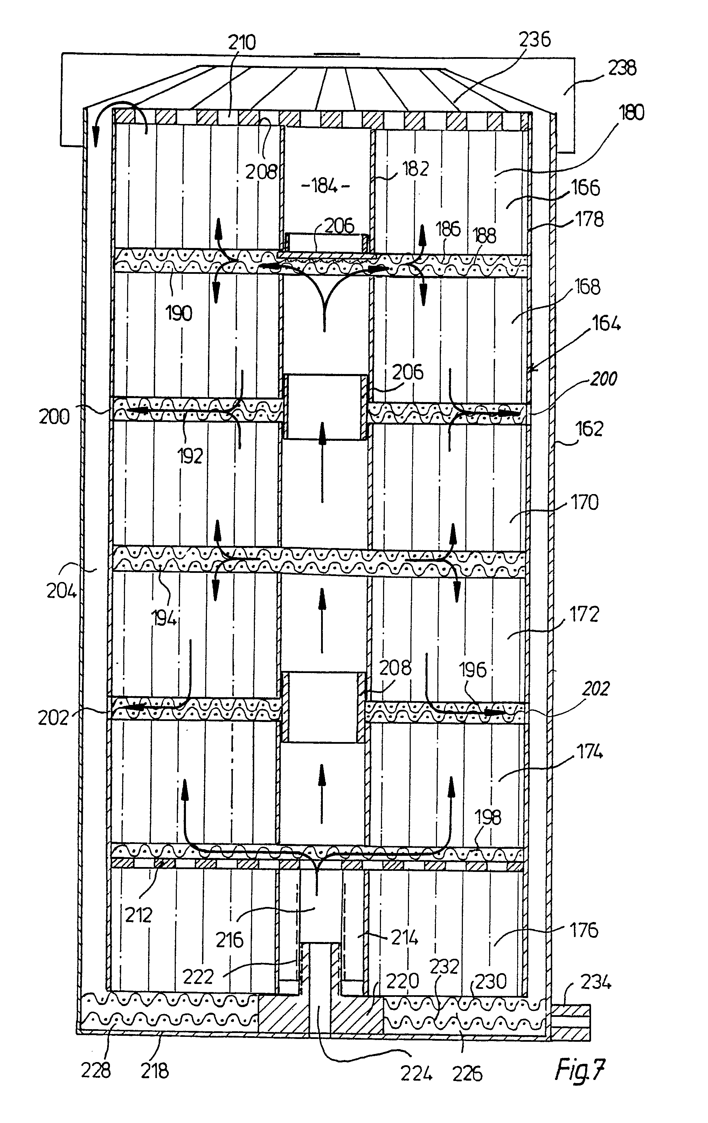

Bei der Ausführung nach Fig. 7 ist in ein langgestrecktes Gehäuse 162 eine Filterpatrone 164 eingesetzt, welche eine Mehrzahl von Filterelementen 166, 168; 170, 172; 174, 176 aufweist, die gleichachsig zueinander angeordnet, strömungsmäßig zwischen einem Flüssigkeitsvorlauf und einem Flüssigkeitsrücklauf parallelgeschaltet und paarweise in entgegengesetzter Richtung axial von der zu filternden Flüssigkeit durchströmt sind.

Die Filterpatrone 164 enthält eine Hülse 178. In dieser Hülse 178 sitzen drei Paare von Filterelementen 166, 168; 170, 172 und 174, 176. Jedes der Paare weist - ähnlich wie die Filterelemente 12 und 14 von Fig. 1 - eine Rolle 180 von Filterpapier auf, die auf einen hohlen Kern 182 mit einem Innenraum 184 aufgewickelt ist. In Fig. 7 sind diese Teile der Übersicht halber nur bei dem Filterelement 166 mit den Bezugzeichen versehen.

Zwischen den verschiedenen Filterelementen 166, 168; 170, 172; 174, 176 sind durch eingelegte Siebe 186, 188 Zwischenräume 190, 192, 194, 196 und 198 gebildet. Die Zwischenräume 192 (zwischen den Filterelementen 168 und 170) und 196 (zwischen den Filterelementen 172 und 174) sind durch seitliche Öffnungen 200 bzw. 202 der Hülse 178 mit einem Mantelraum 204 verbunden ist, der zwischen der Filterpatrone 164 und dem Gehäuse 162 gebildet ist. Diese Zwischenräume 192 und 196 sind gegen die Innenräume 184 der Kerne 182 der angrenzenden Filterelemente 168, 170 bzw. 172, 174 durch Rohrstücke 206 bzw. 208 abgedichtet. Diese Rohrstücke 206, 208 umgreifen die Enden der Kerne 182 der angrenzenden Filterelemente und drücken sich in die Rollen 182 ein. Die Zwischenräume 190, 194 und 198 sind durch die Hülse 178 zu dem Mantelraum 204 hin abgeschlossen. Diese Zwischenräume 190, 194 und 198 sind über die Ringspalte, die zwischen den Enden der Kerne 182 der angrenzenden Filterelemente 166, 168; 170, 172 bzw. 174, 176 gebildet sind, mit den Innenräumen 184 verbunden, die wiederum miteinander in Verbindung stehen. Eine Kappe 206 schließt allerdings den Innenraum 184 des obersten Filterelements 166 gegen den angrenzenden Zwischenraum 190 ab.

Zur Versteifung der langgestreckten Filterpatrone 164 ist die Hülse 178 am oberen Ende, vor der Stirnfläche 208 durch einen Rost 210 abgeschlossen. Ein ähnlicher Rost 212 sitzt in dem Zwischenraum 198 oberhalb des untersten Filterelements 176. An dem Rost 212 ist eine Gewindebuchse 214 mit einem Einlaßkanal 216 angebracht. An der Stirnfläche 218 des Gehäuses 162 sitzt ein zentraler Sockel 220 mit einem Außengewinde 222, auf das die Gewindebuchse 214 beim Einsetzen der Filterpatrone 178 aufschraubbar ist. Durch den Sockel 220 verläuft eine Bohrung 224, durch welche der Einlaßkanal 216 mit einem Flüssigkeitsvorlauf verbunden werden kann. Durch den Sockel 220 und die Gewindebuchse 214 wird die Filterpatrone 164 im Abstand von der Stirnfläche 218 des Gehäuses 162 gehalten. Es wird daher zwischen der unteren Stirnfläche 226 der Filterpatrone 164 ein freier Raum 228 gebildet. In diesem Raum 228 können auch zur besseren Abstandshaltung Siebe 230, 232 angeordnet sein. Der Raum 228 ist mit einem Rücklaufanschluß 234 verbunden, der zu einem Flüssigkeitsrücklauf führt.

Der Sockel 220, die Gewindebuchse 214 und die miteinander in Verbindung stehenden Innenräume 184 der hohlen Kerne 182 bilden "Leitungsmittel" über welche die zu filternde Flüssigkeit zu den längs ihres Umfanges durch die Hülse 178 abgeschlossenen Zwischenräume 198, 194 und 190 geleitet wird. Aus diesen Zwischenräumen wird die Flüssigkeit, wie durch die Pfeile angedeutet ist, in azialer Richtung durch die jeweils benachbarten Filterelemente 174, 176; 170; 172 bzw. 166, 168 in die Zwischenräume 196 und 192, die zu dem Mantelraum 204 hin offen sind bzw. in den freien Raum 228 oder den freien Raum 236 zwischen der Filterpatrone 178 und einem Deckel 238 gedrückt. Von dort läuft die Flüssigkeit, wie angedeutet, zu dem Rücklaufanschluß 234.

Die Verbindung mit dem Flüssigkeitsvorlauf kann statt axial über die Innenräume der hohlen Kerne 182 auch radial über einen oder mehrere Anschlußnippel erfolgen, etwa so, wie das im Zusammenhang mit Fig. 1 und Fig. 4 angedeutet ist.

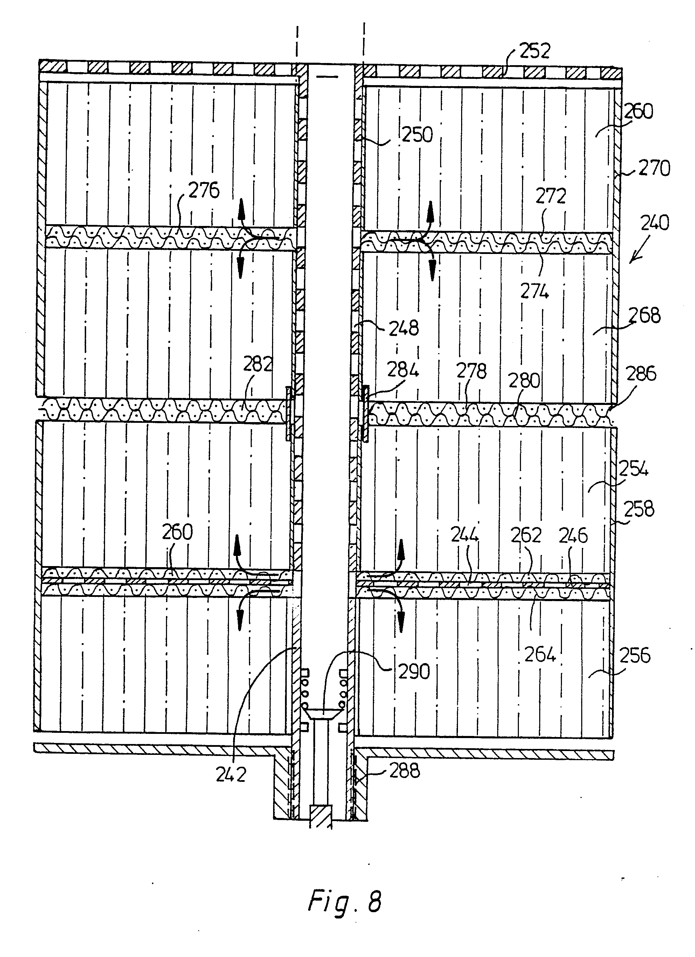

Fig. 8 zeigt ein Filtergerät, das ohne Gehäuse aufgebaut ist und das beispielsweise in einem Vorratsbehälter für Hydrauliköl bei einem hydraulischen System oder aber in einem Speiseölbehälter einer Friteuse angeordnet sein kann.

Die Filterpatrone 240 enthält ein "Gerippe" bestehend aus einem Rohr 242, das senkrecht angeordnet ist, einer am oberen Ende des Rohres 242 angebrachten, mit Durchbrüchen 244 versehenen waagerechten Platte 246, einem mit seitlichen Durchbrüchen 248 versehenen Rohr 250 in Verlängerung des Rohres 242, und einem am oberen Ende des Rohres 250 angebrachten, waagerechten Rost 252. Ein erstes Paar von Filterelementen 254, 256 sitzt in einer Hülse 258. Zwischen den Filterelementen 254 und 256 ist ein Zwischenraum 260 gebildet. In diesem Zwischenraum 260 sitzt die mit Durchbrüchen 244 versehene Platte 246. Oberhalb und unterhalb der Platte 246 sind zur Bildung des Zwischenraumes 260 Siebe 262 bzw. 264 angeordnet.

Ein zweites Paar von Filterelementen 266 und 268 sind gleichachsig zu den Filterelementen 254 und 256 auf dem mit Durchbrüchen 248 versehenen Rohr 250 angeordnet. Die Filterelemente 266 und 268 sitzen in einer Hülse 270. Zwischen den Filterelementen 266 und 268 ist durch Siebe 272 und 274 ein Zwischenraum 276 gebildet.

Die Filterelemente 254, 256, 266 und 268 sind in der oben beschriebenen Weise mit hohlen Kernen und Rollen aus Filterpapier aufgebaut.

Die beiden Zwischenräume 260 und 276 sind über die Durchbrüche 248 mit dem Inneren des Rohres 250 und des Rohres 242 verbunden. Die Zwischenräume 260 und 276 sind durch die Hülsen 258 bzw. 270 längs des Umfanges abgeschlossen.

Zwischen den Filterelementen 268 und 254 ist durch Siebe 278, 280 ein weiterer Zwischenraum 282 gebildet. Der Zwischenraum 282 ist nach inen zu durch ein Rohrstück 284 abgeschlossen, welches das Rohr 250 und die hohlen Kerne der Filterelemente 268 und 254 umgreift und in die Rollen dieser Filterelemente eingedrückt ist. Nach außen hin ist der Zwischenraum 282 über den Ringspalt 286 zwischen den Hülsen 270 und 258 offen.

Das Rohr 242 ist mit einem Gewinde versehen und in ein Innengewinde eines Gewindestützens 288 einschraubbar, der mit einem Flüssigkeitsvorlauf verbunden ist. In dem Rohr 242 ist ein Ventil 290 angeordnet, das beim Einschrauben des Rohres 242 in den Gewindestutzen 288 automatisch öffnet und beim Herausschrauben und Herausnehmen der Filterpatrone automatisch schließt.

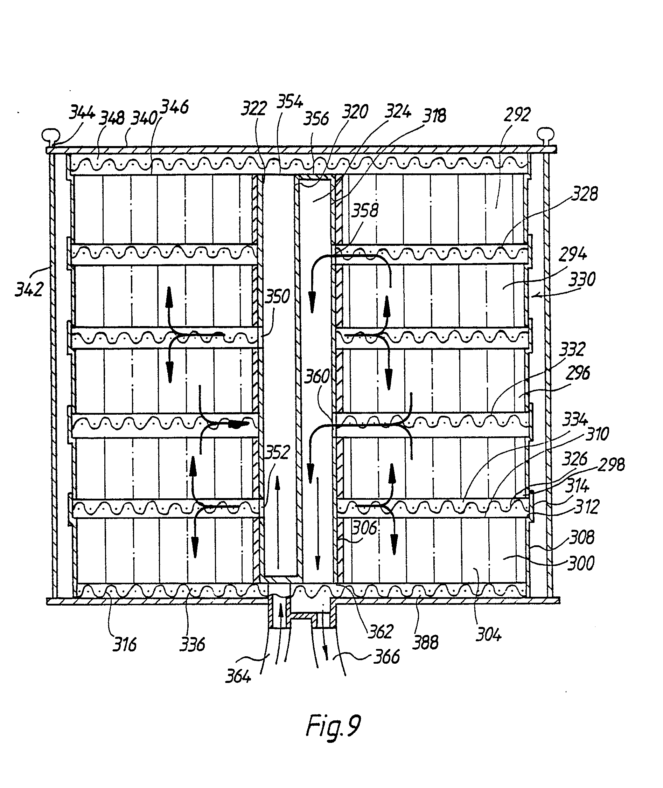

Fig. 9 zeigt ebenfalls eine Anordnung ohne Gehäuse mit einer zentralen Versteifung.

Bei dieser Anordnung sind eine Mehrzahl von Filterelementen 292, 294, 296, 298 und 300 vorgesehen. Jedes Filterelement 292 bis 300 enthält eine Rolle 304 aus einem bandförmigen Filterpapier, die auf einen hohlen Kern 306 aufgewickelt ist. Bei der Ausführungsform nach Fig. 9 sitzt jede dieser Rollen 304 in einer Hülse 308, welche die Rolle 304 dicht umschließt. Die Hülse 308 erstreckt sich jedoch auf einer Seite (oben in Fig. 9) über die Stirnfläche 310 der Rolle 304 hinaus. Dort bildet die Hülse 308 eine Stufe 312 nach außen, an welche sich ein Kragen 314 anschließt. Der Innendurchmesser des Kragens 314 entspricht etwa dem Außendurchmesser der Hülse 308 im Bereich der Rolle 304.

Der Übersichtlichkeit halber sind auch in Fig. 9 die einzelnen Teile der im übrigen übereinstimmenden Filterelemente 292 bis 300 nur bei dem Filterelement 300 mit Bezugszeichen versehen.

Auf einer Grundplatte 316 ist ein vertikales Rohr 318 angebracht. Dieses Rohr 318 ist durch eine Trennwand 320 in einen Vorlaufkanal 322 und einen Rücklaufkanal 325 unterteilt. Auf dieses Rohr 318 sind die untereinander gleichen Filterelemente 292 bis 300 aufgesetzt. Dabei werden durch zwischengelegte Siebe 326 Zwischenräume 328, 330, 332 und 334 gebildet. Diese Zwischenräume 328, 330, 332 und 334 sind nach außen zu durch die Kragen 312 abgeschlossen, von denen jeder abdichtend über die Außenfläche der Hülse 308 des benachbarten Filterelements greift.

Das unterste Filterelement 300 sitzt unter Zwischenlage von Sieben 336 als Abstandsstück auf der Grundplatte 316 auf, so daß zwischen der Grundplatte 316 und dem Filterelement 300 ein Zwischenraum 338 gebildet wird. Auf dem Kragen des obersten Filterelements 202 liegt ein Deckel 340. Der Deckel 340 wird durch Stangen 342 mit Flügelmuttern 344 gegen die Grundplatte 316 gezogen, wodurch die Filterelemente 292 bis 300 in axialer Richtung gehalten werden. Zwischen dem Deckel 340 und der oberen Stirnfläche 346 des obersten Filterelements 292 wird so ein Zwischenraum 348 gebildet.

Das Rohr 318 hat eine seitliche Auslaßöffnung 350, über welche der Vorlaufkanal 322 mit dem Zwischenraum 330 in Verbindung steht, und eine seitliche Auslaßöffnung 352, über welche der Vorlaufkanal 322 mit dem Zwischenraum 334 in Verbindung steht. Über eine Auslaßöffnung 354 in einer das Rohr 318 abschließenden Kappe 356 steht der Vorlaufkanal 322 weiterhin mit dem Zwischenraum 348 in Verbindung.

Das Rohr 318 weist weiterhin eine seitliche Einlaßöffnung 358 auf, über welche der Zwischenraum 328 mit dem Rücklaufkanal 324 verbunden ist, eine seitliche Einlaßöffnung 360, über welche der Zwischenraum 332 mit dem Rücklaufkanal 324 verbunden ist, und eine seitliche Einlaßöffnung 362, über welche der Zwischenraum 338 mit dem Rücklaufkanal 324 verbunden ist.

Der Vorlaufkanal 322 ist mit einem Flüssigkeitsvorlauf 364 verbunden. Der Rücklaufkanal 324 ist mit einem Flüssigkeitsrücklauf 366 verbunden. Eine zu filternde Flüssigkeit fließt in dem Vorlaufkanal 322 hoch und über die Auslaßöffnungen 350, 352 und 354 in die Zwischenräume 330, 334 bzw. 348. Von dort wird die Flüssigkeit in axialer Richtung durch die Filterelemente 294 und 296 bzw. 298 und 300 bzw. 292 in die Zwischenräume 328 und 332 bzw. 332 und 336 bzw. 328 gedrückt. Aus diesen Zwischenräumen 328, 332 und 336 fließt die Flüssigkeit über die Einlaßöffnungen 358, 360 und 362 in den Rücklaufkanal 324 und zum Flüssigkeitsrücklauf 366.

Mit der Anordnung nach Fig. 9 können aus übereinstimmenden "Bausteinen", nämlich den Filterelementen 292 bis 300, unterschiedlich große Filtergeräte hergestellt werden. Sowohl Vorlauf als auch Rücklauf der Flüssigkeit erfolgt durch ein einziges, zentrales Rohr, das gleichzeitig für die radiale Führung der Filterelemente 292 bis 300 sorgt und die Stabilität des Filtergeräts erhöht. Ein Gehäuse ist nicht erforderlich.

Bei den vorstehend, beschriebenen Filtergeräten wird die verunreinigte, zu filternde Flüssigkeit also nicht in das Gehäuse eingeleitet, wie bei dem eingangs diskutierten, bekannten Filtergerät, sondern in den nach außen abgeschlossenen Zwischenraum. Von dort strömt die Flüssigkeit in entgegengesetzten Richtungen axial durch die Filterelemente, und zwar von innen nach außen und nicht wie beim Stand der Technik von außen nach innen. An den Stirnseiten der Filterpatrone tritt gefilterte Flüssigkeit aus. Verunreinigungen haben sich in den Filterelementen und ggfs. in dem Zwischenraum zwischen den Filterelementen oder dem Innenraum eines die Filterelemente tragenden Kerns abgesetzt und werden beim Wechsel der Filterpatrone mit entfernt. Es erfolgt keine Verschmutzung des Gehäuses. Das Gehäuse kommt nur mit gefilterter Flüssigkeit in Berührung. Ein Mantelraum zwischen Filterpatrone und Gehäuse steht mit dem Rücklauf in Verbindung, ist also drucklos.

Es wird also kein Gehäuse einem erhöhten Vorlaufdruck ausgesetzt. Bei manchen Anwendung ist überhaupt kein Gehäuse erforderlich. Es kann z. B. die Filterpatrone unmittelbar in einem Flüssigkeitsvorratsbehälter angeordnet sein, so daß die aus den Stirnseiten der Filterpatrone austretende Flüssigkeit unmittelbar in den Flüssigkeitsvorratsbehälter zurückfließt.

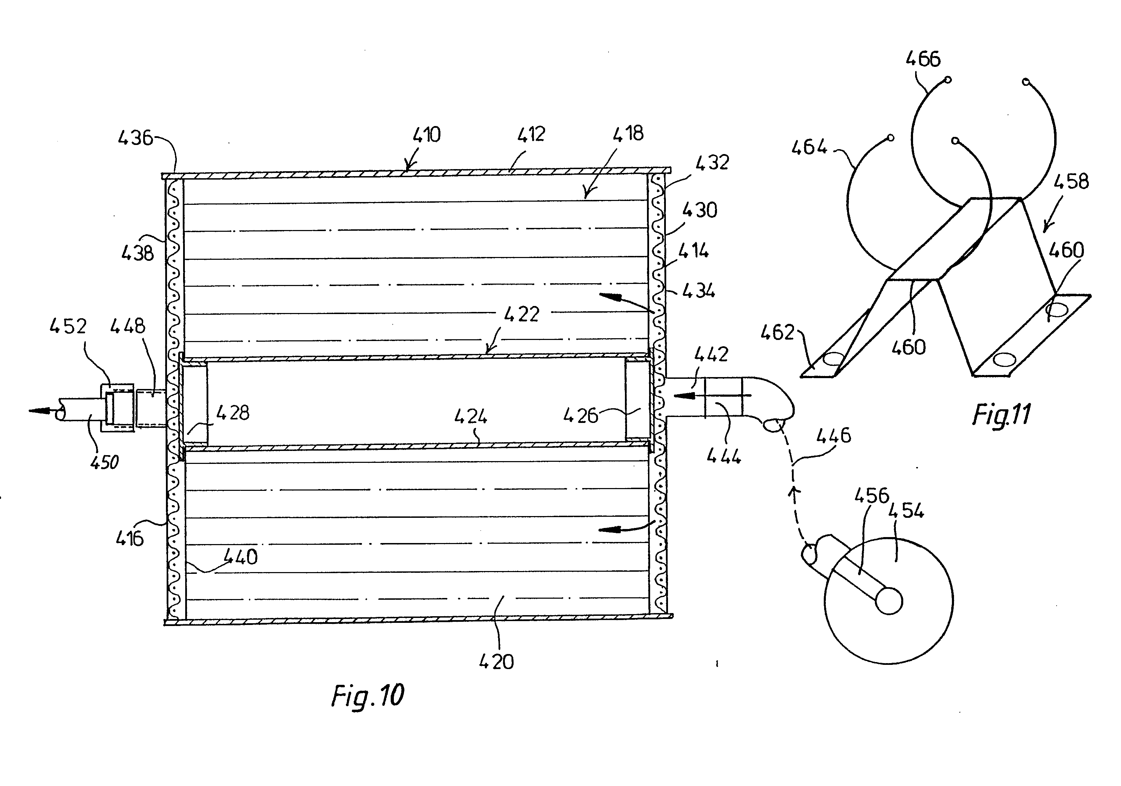

In Figur 10 ist mit 410 ein zylindrisches Gehäuse bezeichnet. Das Gehäuse 410 weist eine Mantelfläche 412, eine erste Stirnfläche 414 und eine weite Stirnfläche 416 auf. In dem Gehäuse 410 sitzt ein Filterelement 418. Das Filterelement 418 ist von einer Rolle 420 aus einem bandförmigen, saugfähigen Material, nämlich Filterpapier, hergestellt. Diese Rolle 420 ist auf einen Kern 422 aufgewickelt. Der Kern 422 ist bei der Ausführung nach Figur 10 geschlossen. Der Kern 422 eines als Wegwerfteil konstruierten Filtergerätes besteht aus einer Hülse 424, die an den Enden durch Kappen 426, 428 abgeschlossen ist. Die Rolle 420 ist in das Gehäuse 410 eingepreßt, so daß sie mit ihrer äußeren Lage unmittelbar an der Innenwandung des Gehäuses 410 anliegt. Zwischen der in Fig. 1 rechten Stirnfläche 430 des Filterelementes 418 und den benachbarten ersten Stirnfläche 414 des Gehäuses 410 ist ein Zwischenraum 432 freigehalten. Als Mittel zur Freihaltung des Zwischenraumes 432 dienen eingelegte Siebe 434. Entsprechend ist ein Zwischenraum 436 zwischen der in Fig. 1 linken Stirnfläche 438 des Filterelementes 418 und der benachbarten zweiten Stirnfläche 416 des Gehäuses 410 freigehalten. Auch hier dienen eingelegte Siebe 440 als Mittel zur Freihaltung des Zwischenraumes 436.

Zentral an der ersten Stirnfläche 414 des Gehäuses 410 ist ein Vorlaufanschluß 442 angebracht, der mit dem Zwischenraum 432 in Verbindung steht. Das ist ein Anschlußstutzen, der in der Darstellung rechts in Fig. 10 über eine bekannte und daher nicht im einzelnen dargestellte Steckverbindung 444 oder "Schnellkupplung" mit einem Schlauchabschnitt 446 verbunden ist. Der Schlauchabschnitt 446 bildet einen Teil des Flüssigkeitsverlaufs.

Zentral an der zweiten Stirnfläche 416 des Gehäuses 410 ist ein Rücklaufanschluß 448 angebracht, der mit dem Zwischenraum 436 in Verbindung steht. Der Rücklaufanschluß 448 ist mit einem Schlauchabschnitt 450 verbindbar. Dieser Schlauchabschnitt 450 bildet einen Teil des Flüssigkeitsrücklaufes. In Fig. 10 ist der Rücklaufanschluß 448 als Gewindestutzen ausgebildet. Der Schlauchabschnitt 450 ist mittels einer Überwurfmutter 452 mit diesem Gewindestutzen verbunden.

In Fig. 10 sind zwei Möglichkeiten der Befestigung der Schlauchabschnitte 446 und 450 dargestellt. In der Praxis wird man natürlich für beide Anschlüsse die gleichen Anschlußmittel verwenden, also entweder Steckverbindungen für beide Schlauchabschnitte 446 und 450 oder Überwurfmuttern für beide Schlauchabschnitte.

Wie in Fig. 10 angedeutet, ist an dem konventionellen Hauptstrom-Ölfilter einer Verbrennungskraftmaschine ein Adapter 454 mit einer Abzweigung 456 angebracht. Der Schlauchabschnitt 446 des Flüssigkeitsvorlauf ist mit dieser Abzweigung 456 verbunden. Dadurch wird ein Teilstrom von Motorenöl auf das Filtergerät umleitbar. Der Schlauchabschnitt 450 des Flüssigkeitsrücklaufs ist mit der Ölwanne der Verbrennungskraftmaschine verbunden.

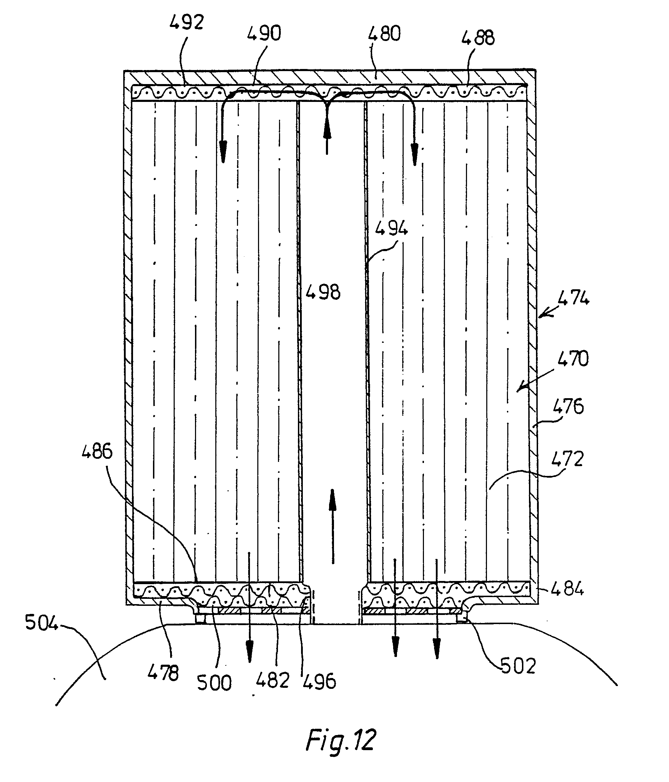

Das Filtergerät ist in einer leicht lösbaren Halterung gehaltert, die in Fig. 11 perspektivisch dargestellt ist. Die Halterung kann auf einfache Weise im Motorraum eines Kraftfahrzeuges befestigt werden. Die Halterung nach Fig. 11 enthält einen Fuß 458. Der Fuß 458 ist ein im wesentlichen V-förmig mit einer flachen Oberseite 460 gebogener Blechwinkel. Die Ränder sind nach außen abgewinkelt und bilden Befestigungsflansche 462. Auf der flachen Oberseite 460 sind im Abstand voneinander zwei kreisbogenförmige, oben offene, federnde Bügel 464, 466 angebracht. In diesen Bügeln 464, 466 ist das Gehäuse 410 des Filtergeräts gehaltert.

Die Wirkungsweise der beschriebenen Anordnung ist wie folgt:

Während des Ölumlaufs wird ständig ein Teilstrom des Motorenöls über die Abzweigung 456 und den Schlauchabschnitt 446 auf das Filtergerät umgeleitet. Dieser Teilstrom tritt über den Vorlaufanschluß 442 in den Zwischenraum 432, wird axial durch die Rolle 420 gedrückt und sammelt sich dann wieder in dem Zwischenraum 436. Von dort fließt es über den Rücklaufanschluß 448 und den Schlauchabschnitt 450 in die Ölwanne der Verbrennungskraftmaschine zurück. Auf diese Weise werden dem Öl ständig Verunreinigungen entzogen.

Diese Verunreinigungen werden von dem Filtergerät aufgenommen. Wenn die Rolle 420 des Filterelementes 418 hinreichend viele Verunreinigungen aufgenommen hat und die Wirksamkeit des Filters dadurch beeinträchtigt ist, werden die Anschlüsse zu den Schlauchabschnitten 446 und 450 gelöst. Es wird dann das Filterelement 418 mitsamt dem Gehäuse 410 aus der Halterung 458 herausgezogen und durch ein neues Filterelement mit Gehäuse ersetzt. Nach dem Anschließen der Schlauchabschnitte ist das Filtergerät wieder betriebsbereit.

Eine andere Ausführungsform eines Filtergerätes ist in Fig. 12 dargestellt.

In Fig. 12 ist ein Filterelement 470 ebenfalls von einer Rolle 472 aus Filterpapier gebildet. Das Filterelement 470 sitzt in einem zylindrischen Gehäuse 474. Das Gehäuse 474 hat eine Mantelfläche 476, eine erste Stirnfläche 478 und eine zweite Stirnfläche 480.

Die Rolle 472 aus Filterpapier liegt ebenfalls mit ihrer äußeren Lage unmittelbar an der Innenwandung des Gehäuses 474 an. Zwischen der in Fig. 12 unteren Stirnfläche 482 der Rolle 472 und der benachbarten ersten Stirnfläche 478 des Gehäuses 474 ist ein Zwischenraum 484 gebildet. Der Zwischenraum 484 wird durch Siebe 486 freigehalten. Zwischen der in Fig. 12 oberen Stirnfläche 488 und der zweiten Stirnfläche 480 des Gehäuses 474 ist ein Zwischenraum 490 gebildet. Der Zwischenraum 490 wird durch Siebe 492 freigehalten.

Die Rolle 472 ist auf einen hohlen Kern 494 gewickelt. Dieser Kern 494 ist bei dem Filtergerät nach Fig. 12 offen. Ein Vorlaufanschluß 496 ist zentral an der ersten Stirnfläche 478 des Gehäuses 474 angebracht. Dieser Vorlaufanschluß 496 durchsetzt den Zwischenraum 484 und ist mit den Innenraum 498 des Kernes 494 abdichtend verbunden. Der Zwischenraum 484 auf der Seite des Vorlaufanschlusses 496 ist gegen den Vorlaufanschluß 496 abgedichtet. Auf der gegenüberliegenden Seite ist der Innenraum 498 des Kerns 494 mit dem dort gebildeten Zwischenraum 490 in Verbindung. Der Zwischenraum 484 steht mit einem Rücklaufanschluß 500 in Verbindung. Bei der speziellen Ausführung nach Fig. 12 ist der Rücklaufanschluß 500 ein um den Vorlaufanschluß 496 herum in der ersten Stirnfläche gebildeter Auslaß. Dieser Auslaß kann von einer einzigen kreisrunden Öffnung gebildet werden, in welcher der Vorlaufanschluß 496 durch Stege gehalten ist. Es können aber auch mehrere getrennte Durchbrüche als Rücklaufanschluß 500 um den Vorlaufanschluß 496 herum in der Stirnfläche 406 vorgesehen sein. An der Stirnfläche 496 des Gehäuses 474 ist auf der Außenseite um den Rücklaufanschluß 500 herum eine Dichtung 502 vorgesehen. Diese dichtet den Rücklaufanschluß 500 in der Betriebsstellung nach außen hin ab.

Dieses Filtergerät ist als Vollstrom-Ölfilter direkt mit einem Motorblock 504 einer Verbrennungskraftmaschine verbunden. Der zu filternde Flüssigkeitsstrom (Ölstrom) fließt durch den Vorlaufanschluß un den Innenraum 498 des Kerns 494 in den Zwischenraum 490. Aus dem Zwischenraum 490 wird die Flüssigkeit in axialer Richtung durch die Rolle 472 gedrückt. Das ist durch die Pfeile angedeutet. Die gefilterte Flüssigkeit tritt an der unteren Stirnfläche 482 der Rolle 472 aus und fließt durch den Zwischenraum 484 zum Rücklaufanschluß 500.

Wenn das Filterelement 470 verbraucht ist, wird es mit dem Gehäuse abgenommen und durch ein neues Filterelement mit neuem Gehäuse ersetzt.

Der Rücklaufanschluß kann im Bedarfsfall auch von einem zweiten axialen oder radialen Anschlußstutzen gebildet werden statt von einem den Vorlaufanschluß umgebenden Auslaß.

Statt zur Filterung von Motorenöl kann ein Filtergerät der vorstehend im Zusammenhang mit Fig. 10 oder 12 beschriebenen Art auch zur Filterung von Speiseöl, etwa in Friteusen, oder zur Filterung von Öl in Industriemaschinen verwendet werden. Bei der Filterung von Speiseöl muß sichergestellt sein, daß das Öl ausreichend erwärmt und damit flüssig ist, bevor ein Ölumlauf und eine Filterung eingeleitet werden kann.

Die nachstehenden Ausführungsbeispiele des kombinierten Haupt-und Nebenstromfiltergerätes sind im Zusammenhang mit der Druckumlaufschmierung bei einem Verbrennungsmotor beschrieben und dienen zum Filtrieren des unter Druck aus einer einen Vorratsbehälter bildenden Ölwanne umgepumpten Schmieröls. Solche kombinierten Haupt-und Nebenstromfiltergeräte können jedoch in Verbindung mit vielen anderen Druckumlaufsystemen, z. B. zu Kühl-und Schmierzwecken eingesetzt werden, bei denen ein unter Druck umlaufendes flüssiges Medium durch Filtration gereinigt werden muß.

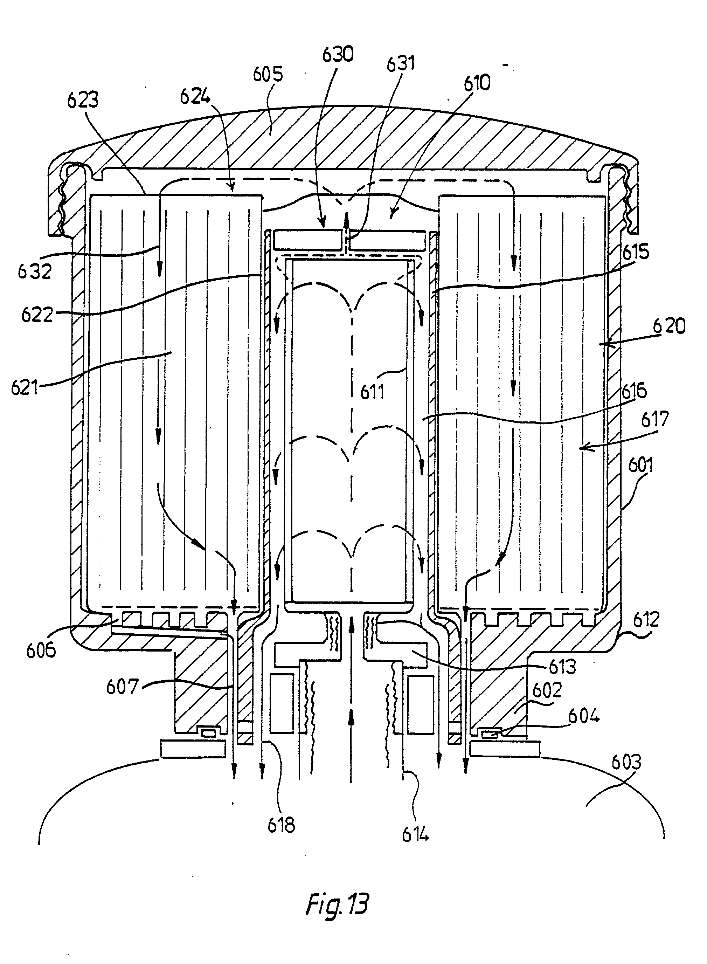

Fig. 13 zeigt schematisch einen Längsschnitt durch ein Ausführungsbeispiel eines kombinierten Haupt-und Nebenstromfiltergerätes mit einem gemeinsamen Gehäuse 601, das mit einem Anschlußstück 602 am Motorblock 603 eines Verbrennungsmotors unter Zwischenlage von Dichtungsmitteln wie einem Dichtungsring 604 abdichtend befestigt ist. Das kombinierte Haupt-und Nebenstromfiltergerät kann aber auch in üblicher Weise am Motorblock direkt aufgeschraubt werden. An der dem Motorblock 603 abgewandten Seite ist das gemeinsame Gehäuse 601 durch einen Deckel 605 abdichtend verschlossen, der als leicht abnehmbarer Schraubdeckel ausgebildet ist.

Ein Hauptstromfilter 610 ist koaxial in dem gemeinsamen Gehäuse 601 angeordnet. Es enthält einen Filterkörper 611, der in dem dargestellten Ausführungsbeispiel zylindrisch ausgebildet ist und aus einem Drahtgeflecht mit einer Porenweite im Bereich von 40 bis 100 μ besteht ("Poroplate"; Haver u. Boecker, D-4740 Oelde). Der Filterkörper 611 wird von einem Eingangsteil 612 getragen, der über einen Adapter 613 an eine Druckleitung 614 für Öl angeschlossen ist.

Der Filterkörper 611 ist mit Abstand von einem Hauptstromfiltergehäuse 615 umgeben, das ebenfalls an dem Motorblock 603 befestigt ist und einen Durchlaufkanal 616 bestimmt, der zum Motorblock 603 hin offen ist und dadurch mit dem Vorratsbehälter, d. h. der hier nicht dargestellten Ölwanne, in Verbindung steht.

Das Hauptstromfiltergehäuse 615 bestimmt in dem gemeinsamen Gehäuse 601 einen zylindermantelförmigen Ringraum 617 der das Filterelement 621 eines Nebenstromfilters 620 aufnimmt. Das Filterelement 621 besteht aus einem auf einen Kern 622 gewickelten Körper aus Filtrierpapier mit einem Oberflächengewicht im Bereich von 70 - 100 g/m², das flusenfest sowie wasser-und lösungsmittelbeständig ist und eine hohe Aufnahmefähigkeit für Öl und Wasser besitzt. Bevorzugt werden bei dem Filterelement 621 jeweils zwei kreuzweise gelegte Lagen des Filtrierpapiers durch eine Wabenstruktur oder Stützstruktur aus einem unter den Einsatzbedingungen beständigen Kunststoff zusammengehalten. Das Filterelement 621 kann auch in einen perforierten Mantel, z. B. aus Blech, eingeschlossen sein. Das Filterelement 621 des Nebenstromfilters 620 ist so ausgebildet und angeordnet, daß das Nebenstromfilter 620 den Hauptstromfilter 610 koxial umgibt.

An der Stirnseite des Nebenstromfilters 620, die dem Motorblock 603 zugekehrt ist, ist das gemeinsame Gehäuse 601 mit einer Ablaufeinrichtung aus in Umfangsrichtung und/ oder radial verlaufenden Ablaufkanälen 606 versehen, die in einen Durchlaufkanal 607 münden, der den Ringraum 617 mit dem Motorblock 603 und dadurch mit der Ölwanne verbindet.

Das Hauptstromfilter 610 ist an der dem Motorblock 603 abgewandten Seite mit einem Stromteiler 630 versehen, der auswechselbar in das Hauptstromfiltergehäuse 615 eingesetzt, z. B. eingeschraubt, ist und einen Durchgangskanal 631 enthält. In dem dargestellten Ausführungsbeispiel ist ein zentral in dem Körper des Stromteilers 630 ausgebildeter Durchgangskanal 631 vorgesehen; es können statt dessen aber auch mehrere Durchgangskanäle vorhanden sein. Der Stromteiler 630, die dem Motorblock 603 abgewandte Stirnseite 623 des Filterelementes 621 und der Deckel 605 des gemeinsamen Gehäuses 601 bestimmen zusammen einen Überströmraum 624, der den Stromteiler 630 des Hauptstromfilters 610 und das Filterelement 621 des Nebenstromfilters 620 verbindet.

Im Betrieb des vorstehend beschriebenen kombinierten Haupt-und Nebenstromfiltergerätes tritt der durch Pfeile angedeutete Strom des unter Druck umlaufenden Öls aus der Druckleitung 614 durch das Eingangsteil 612 in das Innere des Hauptstromfilters 610. Ein Hauptstrom 618 des das Hauptstromfilter 610 durchsetzenden Öls passiert den Hauptstromfilterkörper 611 und wird durch den Durchlaufkanal 616 im Hauptstromfiltergehäuse 615 zum Motorblock 603 und damit zur Ölwanne zurückgeführt. Die in dem Ölstrom enthaltenen relativ großen Schwebeteilchen werden dabei im Hauptstromfilter 610 zurückgehalten.

Ein Nebenstrom 632 des das Hauptstromfilter 610 durchsetzenden Öls wird durch den Stromteiler 630 aus dem Hauptstromfilter 610 abgezweigt und durch den Überströmraum 624 auf die dem Motorblock 603 abgewandte Stirnseite 623 des Filterelementes 621 des Nebenströmfilters 620 geleitet. Der so entstehende Nebenstrom 632 des Öls tritt durch das Nebenstromfilter 620 hindurch, wobei auch die nach Passieren des Hauptstromfilters 610 verbliebenen relativ feinen Schwebeteilchen aus dem Öl entfernt werden. Der Nebenstrom 632 wird in den Ablaufkanälen 606 gesammelt und durch den zwischen dem gemeinsamen Gehäuse 601 und dem Hauptstromfiltergehäuse 610 gebildeten Durchlaufkanal 607 zum Motorblock 603 und damit zur Ölwanne zurückgeführt. Das Filterelement 621 des Nebenstromfilters 620 ist im Betrieb so eng in den Ringraum 617 eingepaßt, daß sich zwischen dem Überströmraum 624 und dem Durchlaufkanal 607 keine Strömungskurzschlüsse ausbilden können.

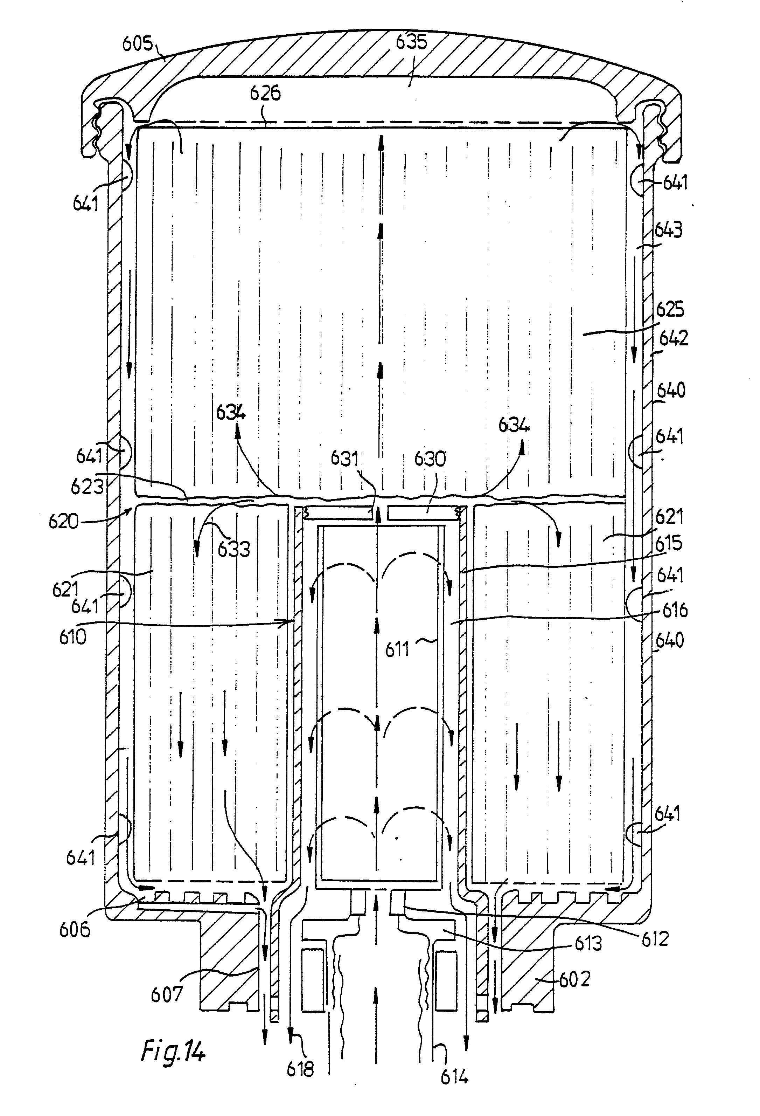

Ein in Fig. 14 dargestelltes zweites Ausführungsbeispiel enthält ein kombiniertes Haupt-und Nebenstromfiltergerät in der vorstehend beschriebenen und in Fig. 13 dargestellten Anordnung; entsprechende Teile sind daher in Fig. 14 mit den gleichen Bezugszeichen versehen. In dem in Fig. 14 dargestellten zweiten Ausführungsbeispiel enthält das Nebenstromfilter 620 zusätzlich ein weiteres Filterelement 625, das koaxial zu dem Hauptstromfilter 610 und dem Filterelement 621 des Nebenstromfilters 620 angeordnet ist und wie vorstehend beschrieben aus Papier gewickelt sein kann. Dieses weitere Filterelement 625 füllt den Raum zwischen dem Deckel 605 des gemeinsamen Gehäuses 640 und dem Stromteiler 630 und der Stirnseite 623 des Filterelementes 621 im wesentlichen aus. Auch das weitere Filterelement 625 kann in einen perforierten Blechmantel eingeschlossen sein. Es können gegebenenfalls auch mehrere weitere Filterelemente 625 vorhanden sein.

Bei dieser Ausführung des kombinierten Haupt- und Nebenstromfiltergerätes wird der aus dem Stromteiler 630 austretende Nebenstrom in einen ersten Teilstrom 633, der das Filterelement 621 des Nebenstromfilters 620 durchsetzt, und einen zweiten Teilstrom 634 geteilt, der das weitere Filterelement 625 des Nebenstromfilters 620 durchsetzt. Nach Passieren des Filterelementes 621 wird der Teilstrom 633 in den Ablaufkanälen 606 des gemeinsamen Gehäuses 640 gesammelt. Der zweite Teilstrom 634 durchsetzt das weitere Filterelement 625 in Richtung auf den Deckel 605 des gemeinsamen Gehäuses 640 und tritt durch einen Überströmraum 635 aus, der zwischen der dem Hauptstromfilter 610 abgewandten Stirnseite 626 des weiteren Filterelementes 625 und dem Deckel 605 des gemeinsamen Gehäuses ausgebildet ist.

Die Filterelemente 621 und 625 des Nebenstromfilters 620 sind im Abstand von einer Gehäusewandung 642 des gemeinsamen Gehäuses 640 umgeben und liegen an Führungskörpern 641 an, die an der Gehäusewandung 642 ausgebildet sind. Dadurch wird der Wechsel der Filterelemente 621 und 625 sehr erleichtert. Der zweite Nebenstrom 634 tritt durch den Überströmraum 635 in einen Durchlaufkanal 643 über, der zwischen der Umfangsfläche der Filterelemente 621 und 625 und der Gehäusewandung 642 des gemeinsamen Gehäuses 640 ausgebildet ist. Der zweite Teilstrom 634 und der erste Teilstrom 633 vereinigen sich in den Ablaufkanälen 606 und dem Durchlaufkanal 607, durch die sie zum Motorblock 603 und damit zur Ölwanne zurückgeführt werden.

Bei Bedarf kann das gemeinsame Gehäuse 601 oder 640 auch mit einem konventionell ausgebildeten Kühlmantel versehen werden.

Die Filterelemente in den vorstehend beschriebenen Ausführungsbeispielen der Filtergeräte bestehen aus Rollen aus einem Papier, das unter der Bezeichnung "Hiloft 3051", Wypall, Itex Software" vertriebene Filtrierpapier der Firma Scott Paper; Scott Plaza; Philadelphia, USA. Dieses Filtrierpapier hat ein Flächengewicht von 85 bis 95 g/m² und besteht zu 94 Gew.-% Cellulose und 6 Gew.-% aus einem indifferenten Kunststoff, jeweils bezogen auf das Gesamttrockengewicht = 100. Zwei kreuzweise zusammengelegte Schichten werden durch eine Wabenstruktur von ca. 1 mm Durchmesser zusammengehalten. Die Aufnahmefähigkeit dieses Papiers für Wasser, Benzin und Öl beträgt mehr als das Doppelte des Eigengewichtes.

Solches Papier ist hervorragend zur Filtration von wässrigen und nichtwässrigen Flüssigkeiten, insbesondere von Öl wie Schmieröl oder Hydrauliköl in Ölfilteranlagen geeignet. Unter Verwendung solcher Papiere hergestellte Filter oder Filterpatronen haben nicht nur eine hohe Filtrationswirkung, sondern besitzen den Vorteil, daß sie in gleicher Weise für wässrige wie für nichtwässrige Flüssigkeiten geeignet sind und sich nicht leicht durch suspendierte Feststoffe zusetzen, woraus lange Nutzungsdauern und hohe Standzeiten resultieren.

Als besonders vorteilhaft hat sich die Verwendung dieses Papiers zum Filtrieren von Schmieröl in der Druckumlaufschmierung von Verbrennungsmotoren erwiesen, da sowohl Wasser als auch Rußteilchen außerordentlich wirksam aus dem umlaufenden Schmieröl entfernt werden, und zwar bei Standzeiten oder Nutzungsdauer, wie sie üblicherweise für die Ölfilter verlangt werden, die in die Druckumlaufschmierung von Verbrennungsmotoren eingebaut werden.

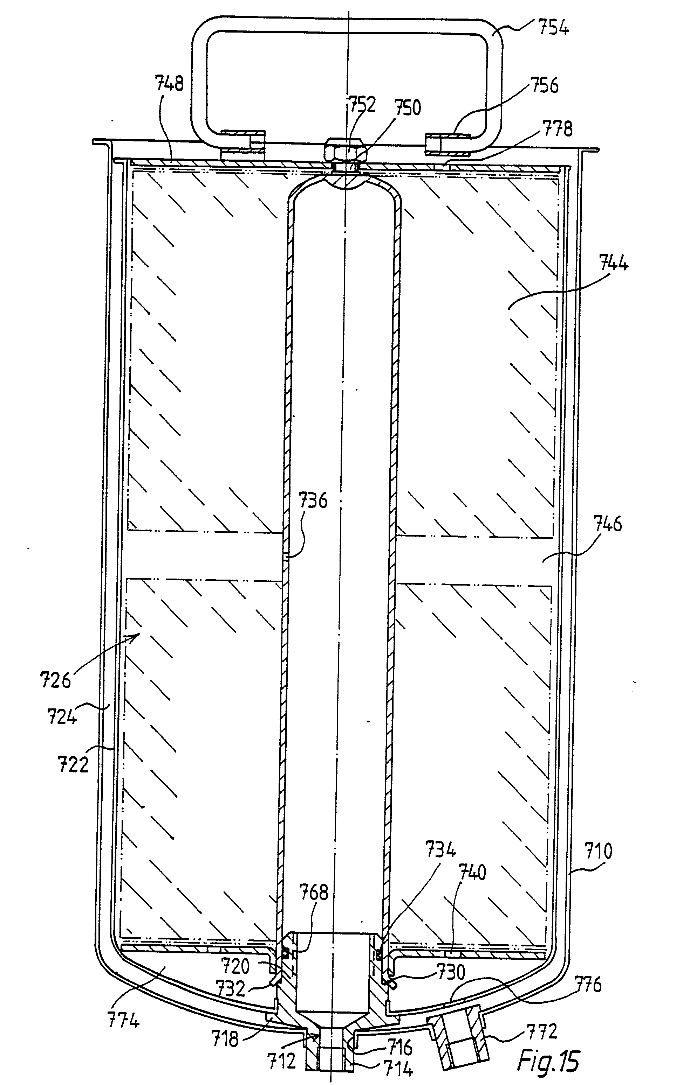

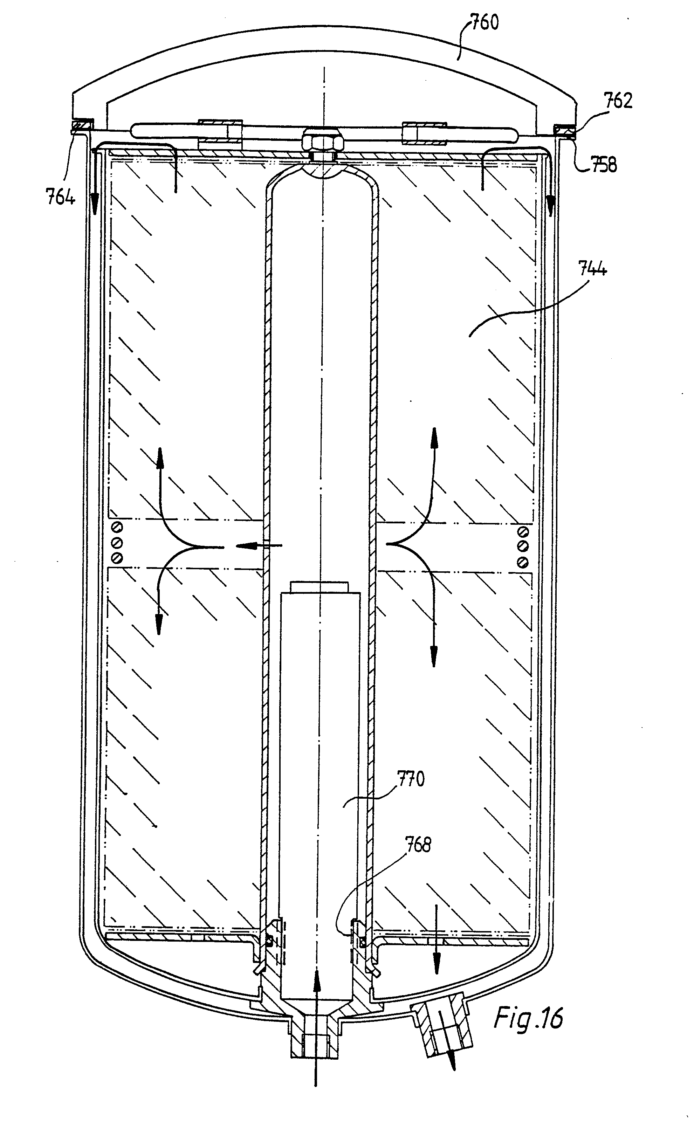

Bei der Ausführungsform nach Fig.15 und 16 ist mit 710 ein topfförmiges Außengehäuse bezeichnet. In dem Boden des Außengehäuses 710 sitzt ein Zulaufstück 712. Das Zulaufstück 712 weist einen Zulaufanschluß 714 auf, der durch einen Durchbruch 716 im Boden des Außengehäuses 710 hindurchragt. Der umgebogene Rand des Durchbruches liegt dabei abdichtend an der Außenfläche des Zulaufanschlusses 714 an. Das Zulaufstück 712 bildet anschließend an den Zulaufanschluß 714 innerhalb des Außengehäuses 710 einen Flansch 718. An den Flansch 718 schließt sich gleichachsig mit dem Zulaufanschluß 714 ein Kragen 720 an. Der Raum innerhalb des Kragens 720 steht mit dem Zulaufanschluß 714 in Verbindung. Um den Kragen 720 herum bildet der Flansch einen Rand, auf welchem ein ebenfalls topfförmiges Innengehäuse 722 sitzt. Das Innengehäuse 722 erstreckt sich im Abstand sowohl vom Boden als auch von der Mantelfläche des Außengehäuses 710 und bildet mit diesem einen Ringraum 724. An den Enden sind Außen-und Innengehäuse 710 bzw. 722 offen.

In dem Innengehäuse 722 sitzt eine auswechselbare Papierfilterpatrone 726. Die Papierfilterpatrone 726 enthält einen Kern 728. Der Kern 728 ist rohrförmig und an einem, den Böden der Innen- und Außengehäuse abgewandten Ende (oben in Fig. 15) geschlossen. Mit dem offenen Ende sitzt der Kern 728 auf dem Kragen 720. Der Kragen 720 bildet an seiner Außenfläche eine Stufe 730, an welcher der Kern 728 mit seinem offenen Ende zur Anlage kommt. Um das Einsetzen der Papierfilterpatrone 726 zu erleichtern, ist der Rand 732 des Kerns 728 konisch nach außen erweitert. Der Kern 728 ist durch einen Dichtring 734 abdichtend auf der Außenfläche des Kragens 720 geführt. In der Mitte weist der Kern 728 seitliche Durchbrüche 336 auf.

An dem offenen Ende des Kerns 728 ist ein Ringteller 738 angeschweißt. Der Ringteller 738 weist Durchbrüche 740 auf. Der Ringteller 738 trägt ein Filterelement 742 in Form einer Rolle von bandförmigem Filterpapier. Das Filterelement 742 sitzt dicht auf dem Kern 728. Auf dem Kern 728 sitzt ein zweites Filterelement 744. Zwischen den Filterelementen 742 und 744 ist ein Zwischenraum 746 gebildet. Das zweite Filterelement liegt an einer Deckelplatte 748 an. Die Deckelplatte 748 sitzt mit einem zentralen Durchbruch auf einem Gewindezapfen 750, der an dem geschlossenen Ende des Kerns 728 angebracht ist, und ist mittels einer Mutter 752 festgezogen. Der Zwischenraum 746 wird durch geeignete Mittel, beispielsweise Siebe oder eine Wendelfeder, freigehalten. An der Deckelplatte ist ein Handgriff 754 in Lagerbuchsen 756 schwenkbar gelagert.

Auf dem nach außen abgebogenen Rand 758 des Außengehäuses 710 sitzt ein Deckel 760. Der Deckel 760 liegt mit einem Rand 762 unter Zwischenlage eines Dichtringes 764 an dem nach außenabgebogenen Rand 758 auf. Die Ränder 758 des Außengehäuses 710 und 762 des Deckels 760 sind durch einen Spannring 766 zusammengehalten, wie in Fig.16 dargestellt ist.

Wie in Fig.16 dargestellt ist, kann, nachdem die Papierfilterpatrone 726 mittels des Handgriffs 754 herausgezogen ist, in den mit einem Innengewinde 768 versehenen Kragen 720 eine Vorfilterkerze 770 eingeschraubt werden.

An dem Außengehäuse 710 ist ein außermittiger Auslaßanschluß 772 vorgesehen.

Eine zu reinigende Flüssigkeit tritt durch die Vorfilterkerze 770, fließt dann, wie in Fig.16 durch Pfeile angedeutet, durch den Zwischenraum 746 und teilt sich dann auf. Ein Teil der Flüssigkeit strömt nach unten in Fig.16 durch das Filterelement 742 und durch die Durchbrüche 740 in eine zwische dem Boden des Innengehäuses 722 und dem Ringteller 738 gebildeten Raum 774. Von dort strömt die gefilterte Flüssigkeit durch Durchbrüche des Bodens des Innengehäuses 722 in den Ringraum 724 und über den Auslaßanschluß 772 in das Flüssigkeitssystem zurück. Der andere Teil der Flüssigkeit strömt nach oben in Fig.16 durch das Filterelement 744 und durch Durchbrüche 778 der Deckelplatte 748 unmittelbar in den Ringraum 724.

Die beschriebene Filtervorrichtung kann wahlweise mit Vorfilterkerze 770 oder ohne Vorfilterkerze benutzt werden.

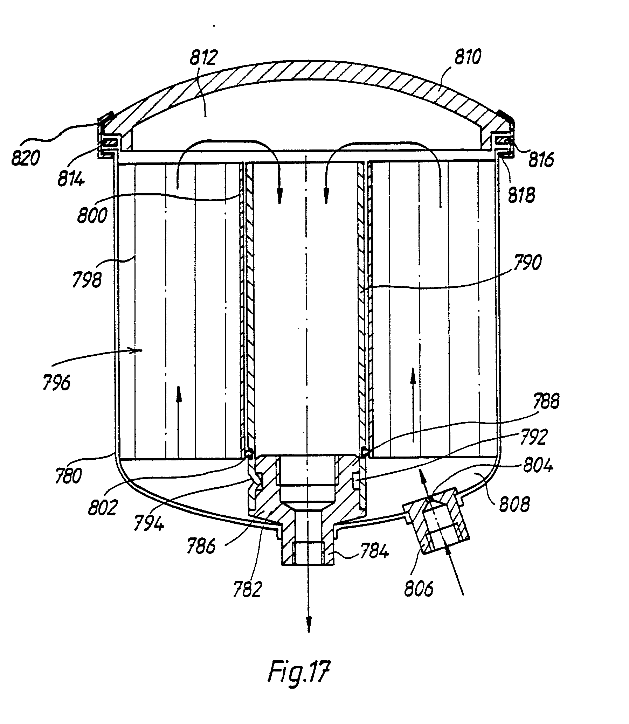

In Fig.17 ist mit 780 ein topfförmiges Gehäuse bezeichnet. Im Boden dieses topfförmigen Gehäuses 780 ist ein zentraler Auslaßteil 782 angeordnet. Der Auslaßteil 782 ragt mit einem Auslaßanschluß 784 durch den Boden des Gehäuses 780. Der Auslaßteil 782 bildet einen Flansch 786. And den Flansch 786 schließt sich ein Kragen 788 an. Auf dem Kragen 788 sitzt eine Hülse 790. Die Stirnfläche der Hülse 790 sitzt auf dem Flansch 786 auf, der einen Rand um den Kragen 788 herum bildet. In der Außenfläche des Kragens 788 ist eine Ringnut 792 eingedreht. In diese Ringnut 792 greift eine Sicke 794 der Hülse 790, so daß die Hülse 790 fest auf dem Auslaßteil 782 gehalten ist. Das Innere des Kragens 788 steht mit dem Auslaßanschluß in Verbindung.

Auf der Hülse 790 sitzt ein Filterelement 796. Das Filterelement 796 besteht wieder aus einer Rolle 798 eines speziellen Filterpapiers, wie oben beschrieben, die auf eine Hülse 800 aufgewickelt ist. Das Filterelement 796 ist mit der Hülse 800 auf die Hülse 790 aufgeschoben. An der Hülse 790 sitzt eine Dichtung 802, welche eine Abdichtung des Zwischenraums zwischen den Hülsen 790 und 800 gewährleistet. Es wird auf diese Weise verhindert, daß Flüssigkeit unter Umgehung des Filterelements 796 zwischen den Hülsen 790 und 800 hindurchströmt.

Unterhalb des Filterelements 796 in der Darstellung von Fig.17 ist zwischen der Stirnfläche des Filterelements 796 und dem Boden des Gehäuses 780 eine Einlaßkammer 804 gebildet. In die Einlaßkammer 804 mündet ein Einlaßanschluß 806, über welchen die zu reinigende Flüssigkeit zugeführt wird. In dem Einlaßanschluß 806 ist eine Reduzierungsdüse 808 gebildet.

Das Gehäuse 780 ist durch einen Deckel 810 abgeschlossen, der eine Sammelkammer 812 vor der in Fig.17 oberen Stirnseite des Filterelements 796 bildet. Der Deckel 810 liegt, ähnlich wie in Fig, 16 und 17, mit einem Rand 814 unter Zwischenlage eines Dichtringes 816 auf einem nach außen abgewinkelten Rand 818 des Gehäuses 780 auf und ist durch einen Spannring 820 festgezogen.

Die zu reinigende Flüssigkeit strömt über den Einlaßanschluß 806 zu, tritt aus der Einlaßkammer 808 wie durch Pfeile angedeutet, in axialer Richtung durch das Filterelement, gelangt so gefiltert in die Sammelkammer 812 und strömt dann durch das Innere der Hülse 790 zum Auslaßanschluß 784.

**Ansprüche**

1. Verfahren zum Filtern verunreinigter Flüssigkeiten, dadurch gekennzeichnet, daß die Flüssigkeit durch mindestens ein Filterelement aus Papier mit einem Flächengewicht im Bereich von 75 -100 g/m² geleitet wird, das 85 bis 98 Gew.-% Cellulose und 15 bis 2 Gew.-% eines indifferenten Kunststoffes, bezogen auf das Gesamttrockengewicht = 100, enthält und aus mindestens zwei durch eine Wabenstruktur zusammengehaltenen Schichten besteht.

2. Filtergerät zum Filtern verunreinigter Flüssigkeiten, gekennzeichnet durch mindestens ein Filterelement (12, 14; 266, 268, 254, 256; 292, 294, 298, 300; 418; 470; 621; 625) aus Papier mit einem Flächengewicht im Bereich von 75 bis 100 g/m², das 85 bis 98 Gew.-% Cellulose und 15 bis 2 Gew.-% eines indifferenten Kunststoffes, bezogen auf das Gesamttrockengewicht = 100, enthält und aus mindestens zwei durch eine Wabenstruktur zusammengehaltenen Schichten besteht.

3. Filtergerät zum Filtern verunreinigter Flüssigkeiten, enthaltend

(a) eine Filterpatrone (62) mit zwei Filterelementen (12, 14), die

-in bezug auf eine Axialrichtung gleichachsig angeordnet sind und

-dazwischen einen Zwischenraum (32) durch Abschlußmittel (10) bilden, der längs seines Umfanges nach außen abgeschlossen ist,

(b) Leitungsmittel (74, 18), die mit dem abgeschlossenen Zwischenraum (32) verbunden sind, und

(c) Mittel zum Hindurchleiten der Flüssigkeit in Axialrichtung durch die Filterelemente, dadurch gekennzeichnet, daß

(d) die Flüssigkeit über die Leitungsmittel (74, 18) in den abgeschlossenen Zwischenraum (32) einleitbar ist.

4. Filtergerät nach Anspruch 3, dadurch gekennzeichnet, daß

(a) die Filterpatrone (62) von einem Gehäuse (64) umgeben ist, wobei zwischen Filterpatrone (82) und Gehäuse (64) ein Mantelraum (66) gebildet ist, und

(b) der Mantelraum (66) mit einem Flüssigkeitsrücklauf in Verbindung steht.

5. Filtergerät nach Anspruch 3, dadurch gekennzeichnet, daß

(a) die Filterelemente (12, 14) von je einer Rolle (22, 22) aus einem bandförmigen, saugfähigen Material gebildet sind, die auf einen hohlen Kern (16, 18) aufgewickelt ist,

(b) die Filterelemente (12, 14) unter Bildung des Zwischenraumes (32) in einer rohrförmigen Hülse (10) gehaltert sind, der die Außenflächen der Filterelemente (12, 14) eng umgibt, und

(c) die Leitungsmittel wenigstens einen Innenraum (26) eines hohlen Kernes (18) enthalten, der mit einem Flüssigkeitsvorlauf verbunden ist,

(d) wobei die Flüssigkeit über den Innenraum (26) des hohlen Kerns (18) des einen Filterelements (14) in den durch die Hülse (10) nach außen abgeschlossenen Zwischenraum (32) und von dort in axialer Richtung durch die von Rollen (20, 22) gebildeten Filterelemente (12, 14) strömt, deren einander abgewandte Stirnseiten (56, 58) mit dem Flüssigkeitsrücklauf verbundene Räume (72, 78) begrenzen.

6. Filtergerät nach Anspruch 5, dadurch gekennzeichnet, daß

(a) zwischen den beiden Filterelementen (12, 14) der Filterpatrone (84) ein Abstandsstück (86) zur Bildung des Zwischenraumes (32) angeordnet ist,

(b) das Abstandsstück (86) einen Flüssigkeitskanal (100) und seitliche Öffnungen (102) aufweist,welche den Flüssigkeitskanal mit dem Zwischenraum (32) außerhalb das Abstandsstückes (86) verbinden,

(c) die Filterelemente (12, 14) unter Zwischenlage des Abstandsstückes (86) in der rohrförmigen Hülse (10) gehaltert sind,

(d) die Leitungsmittel einen radialen Anschlußnippel (104) enthalten, der sich abdichtend durch das Gehäuse (108), den Mantelraum (120) und die Hülse (10) in den abgeschlossenen Zwischenraum (32) erstreckt und mit einem Flüssigkeitsvorlauf in Verbindung steht und der in den Flüssigkeitskanal (100) des Abstandsstücks (84) hineinragt,

(e) das Abstandsstück (86) sternförmig mit einem kreisrunden Mittelteil (88) und radialen Leisten (90, 92, 94) ausgebildet ist, wobei

-der kreisrunde Mittelteil (88) die Innenräume (24, 26) der hohlen Kerne (16, 18) gegen den Zwischenraum (32) abdichtet und

-wenigstens eine der Leisten (90) den mit dem Anschlußnippel (104) verbundenen Flüssigkeitskanal (100) und die Öffnungen (102) aufweist.

7. Filtergerät nach Anspruch 5, dadurch gekennzeichnet, daß

(a) eine Mehrzahl von Filterpatronen aus je zwei Filterelementen gleichachsig zueinander so gehaltert sind, daß zwischen den Filterpatronen weitere Zwischenräume (192, 196) gebildet sind, die von Stirnflächen der Filterelemente (168, 170 bzw. 172, 174) benachbarter Filterpatronen begrenzt sind,

(b) die weiteren Zwischenräume (192, 196) gemeinsam mit dem Flüssigkeitsrücklauf in Verbindung stehen und

(c) die hohlen Kerne (182) von Filterelementen benachbarter Filterpatronen durch Abdeckkringe (206, 208) miteinander verbunden sind, welche die weiteren Zwischenräume (192, 196) überbrücken und gegen die Innenräume der hohlen Kerne (182) abdichten.

8. Filtergerät nach Anspruch 3, dadurch gekennzeichnet, daß

(a) eine Filterpatrone (240), die aus einer Mehrzahl von gleichachsig zueinander angeordneten Filterelementen (266, 268, 254, 256) besteht, durch metallische Stützglieder (246, 250, 252) versteift ist.

(b) die Filterpatrone (240) über Leitungsmittel (242), die an den metallischen Stützgliedern angebracht sind, mit einem Anschluß (288) verbunden sind, der seinerseits mit einem Flüssigkeitsvorlauf verbunden ist, wobei die Filterpatrone (240) auf diesem Anschluß (288) abgestützt ist.

(c) die Filterpatrone (164) einen Hülse (178) enthält, in welcher die Filterelemente (166, 168, 170, 172, 174, 176) sitzen, und die Hülse (178) im Bereich des oberen und des unteren Endes durch je einen scheibenförmigen Rost (210, 212) versteift ist,

(d) die metallischen Stützglieder eine untere, durchbrochene Platte (246), ein dazu senkrechtes, zentrales, mit seitlichen Durchbrüchen (248) versehenes Rohr (250) und eine obere durchbrochene Platte (252) aufweisen und die Filterelemente (266, 268, 254, 256) ringförmig ausgebildet und von dem zentralen Rohr (250) durchsetzt sind, wobei die zu filternde Flüssigkeit über das zentrale Rohr (250) zuführbar ist, und

(e) die Filterpatrone (240) ohne Gehäuse in einem Vorratsbehälter der zu filternden Flüssigkeit angeordnet ist.

9. Filtergerät nach Anspruch 3, gekennzeichnet durch

(a) ein zentrales Rohr (318), das einen Vorlaufkanal (322) und einen Rücklaufkanal (324) enthält,

(b) eine Mehrzahl von übereinstimmenden, ringförmigen Filterelementen (292, 294, 298, 300)

-die zentrale, zylindrische Durchbrüche aufweisen, deren Innendurchmesser im wesentlichen dem Außendurchmesser des Rohres (318) entspricht,

-die mit den Durchbrüchen auf das Rohr (318) aufgesetzt sind und

-zwischen denen radial nach außen hin abgeschlossene Zwischenräume (318, 330, 332, 334) gebildet sind,

(c) seitliche Auslaßöffnungen (350, 352) des Rohres (318), über die eine Verbindung zwischen dem Vorlaufkanal (322) und jedem zweiten den besagten Zwischenräumen (330, 334) hergestellt ist, und

(d) seitliche Einlaßöffnungen (358, 360, 362), über welche die Zwischenräume (328, 332, 338), die den mit dem Vorlaufkanal (322) verbundenen Zwischenräumen (330, 334) benachbart sind, mit dem Rücklaufkanal (224) in Verbindung stehen.

10. Filtergerät nach Anspruch 2, enthaltend

(a) ein Filterelement (418, 470), das von einer Rolle (420, 472) aus einem bandförmigen, saugfähigen Material gebildet ist,

(b) ein zylindrisches Gehäuse (410, 476), in welchem das Filterelement (418, 470) angeordnet ist, mit einem Vorlaufanschluß (442, 496) und einem Rücklaufanschluß (448, 500) und

(c) Mittel (434, 440; 486, 492) zur Freihaltung eines Zwischenraumes (432, 436; 484, 490) zwischen wenigstens einer Stirnfläche (430, 438; 482, 488) des Filterelementes (418, 470) und einer benachbarten Stirnfläche (414, 416; 478, 480) des Gehäuses (410, 476),
dadurch gekennzeichnet, daß

(d) die Rolle (420, 472) aus saugfähigem Material mit ihrer äußeren Lage unmittelbar an der Innenwandung des Gehäuses (410, 476) anliegt,

(e) eine Flüssigkeitsströmung von dem Vorlaufanschluß (442, 496) zum Rücklaufanschluß (448, 500) axial durch die Rolle (420, 472) zwangsgeführt ist und

(f) der Vorlauf-und der Rücklaufanschluß (442, 448; 496, 500) zur leicht lösbaren Befestigung an einem Flüssigkeitsvorlauf bzw. einem Flüssigkeitsrücklauf eingerichtet sind.

11. Filtergerät nach Anspruch 2, enthaltend ein Hauptstromfilter relativ großer Porenweite und ein Nebenstromfilter relativ kleiner Porenweite, die eingangsseitig mit einer Druckleitung eines Druckumlaufsystems und ausgangsseitig mit einem Vorratsbehälter für die Flüssigkeit des Druckumlaufsystems in Verbindung stehen, dadurch gekennzeichnet, daß

(a) das Hauptstromfilter (610) und das Nebenstromfilter (620) koaxial in einem gemeinsamen Gehäuse (601, 640) angeordnet sind und

(b) das Hauptstromfilter (610) einen Stromteiler (630) aufweist, durch den ein Teil der das Hauptstromfilter (610) durchsetzenden Flüssigkeit auf das Nebenstromfilter (620) leitbar ist.

12. Filtergerät nach Anspruch 11, dadurch gekennzeichnet, daß das Hauptstromfilter (610) über seine axiale Länge von dem Nebenstromfilter (620) mantelförmig umgeben ist.

13. Filtergerät nach Anspruch 11, dadurch gekennzeichnet, daß das Hauptstromfilter (610) einen Filterkörper (611) aus einem Drahtgewebe mit einer Maschenweite im Bereich von 50 bis 100 μ aufweist.

14. Filtergerät nach Anspruch 12, dadurch gekennzeichnet, daß

(a) das Hauptstromfilter (610) in einem Hauptstromfiltergehäuse (615) angeordnet ist, welches das Hauptstromfilter (610) im Abstand umgibt und einen Durchlaufkanal (616) bestimmt, der mit dem Vorratsbehälter in Verbindung steht,

(b) der Stromteiler (630) an dem Hauptstromfiltergehäuse (615) an der dem Vorratsbehälter abgewandten Seite angeordnet ist und einen auswechselbar mit dem Hauptstromfiltergehäuse (615) verbunden Körper mit mindestens einem Durchgangskanal (631) bildet,

(c) das gemeinsame Gehäuse (610, 660) und das Hauptstromfiltergehäuse einen das Nebenstromfilter (420) wenigstens teilweise einschließenden Ringraum (617) bestimmen, der an der dem Vorratsbehälter zugekehrten Seite durch einen Durchlaufkanal (607) mit dem Vorratsbehälter in Verbindung steht.

15. Filtergerät nach Anspruch 11 dadurch gekennzeichnet, daß das gemeinsame Gehäuse (601) an der dem Vorratsbehälter abgewandten Seite mit einem abnehmbaren Deckel (605) abdichtend verschlossen ist und daß der Deckel (605), der Stromteiler (630) und die dem Deckel (605) zugekehrte Stirnseite (623) des Nebenstromfilters (620) einen Überströmraum (624) bestimmen, durch den ein aus dem Stromteiler (630) austretender Nebenstrom (632) auf das Nebenstromfilter (620) geleitet wird.

16. Filtergerät nach Anspruch 11, dadurch gekennzeichnet, daß

(a) das gemeinsame Gehäuse (610) an der dem Vorratsbehälter abgewandten Seite mit einem abnehmbaren Deckel (605) abdichtend verschlossen ist,

(b) zwischen dem Stromteiler (630) und dem Deckel (605) mindestens ein weiteres Filterelement (625) des Nebenstromfilters (620) koaxial zu dem Hauptstromfilter (610) angeordnet ist, und

(c) ein erster Teilstrom (633) der aus dem Stromteiler (630) austretenden Flüssigkeit auf das Filterelement (621) und ein zweiter Teilstrom (634) der aus dem Stromteiler (630) austretenden Flüssigkeit durch das mindestens eine weitere Filterelement (625) leitbar ist.

17. Filtergerät nach Anspruch 3, gekennzeichnet durch

(a) ein topfförmiges Außengehäuse (710),

(b) einen Einlaß (712), der zentral im Boden des topfförmigen Außengehäuses (710) angeordnet ist,

-mit einem Einlaßanschluß (714)

-und einem koaxial zu dem Außengehäuse (710) angeordneten Kragen (720), der mit dem Einlaßanschluß (714) in Verbindung steht,

(c) eine Filterpatrone

-mit einem rohrförmigen Kern (728), der an seinem dem Boden des Außengehäuses (710) abgewandten Ende geschlossen ist,

-und einem Paar von Filterelementen (742,744), die aus Rollen von Filterpapierstreifen bestehen und auf den Kern (728) unter Bildung eines Zwischenraumes (746) aufgesetzt sind, wobei der Kern (728) im Bereich des Zwischenraumes seitliche Durchbrüche (736) aufweist,

-und die mit dem Kern (728) an dessen offenem Ende abdichtend auf den Kragen (720) lösbar aufgesetzt ist, und

(d) Mittel zur radialen Begrenzung der Strömung von Flüssigkeit durch die Filterelemente (742,744) auf der Außenseite und zur Bildung eines Ringkanals zwischen Außengehäuse (710) und Filterelementen (742,744).

18. Filtergerät nach Anspruch 17, dadurch gekennzeichnet, daß die Mittel zur radialen Begrenzung der Strömung und zur Bildung eines Ringka-

29       **0 276 795**       30

nals von einen koaxial in dem Außengehäuse (710) angeordneten Innengehäuse (722) gebildet sind.

19. Filtergerät nach Anspruch 18, dadurch gekennzeichnet, daß

(a) an dem Kern (728) im Bereich des offenen Endes ein Ringteller (738) mit Durchbrüchen (740) angebracht ist, auf welchem eines der Filterelemente (742) aufliegt,

(b) an dem geschlossenen Ende des Kerns (728) eine mit Durchbrüchen versehene Deckelplatte lösbar befestigt ist, welche das Innengehäuse abschließt und

(c) das Außengehäuse (710) durch einen lösbaren Deckel (760) abgeschlossen ist.

16

*Fig.1*

*Fig. 2*

Fig. 3

*Fig.4*

Fig. 5

Fig. 6

0 276 795

Fig.7

Fig. 8

Fig.9

Fig.10

Fig.11

0 276 795

Fig.12

*Fig. 13*

Fig.14

0 276 795

*Fig.15*

Fig.16

Fig.17